# EUROPEAN PATENT SPECIFICATION

(11) **EP 1 502 053 B1**
(45) Date of publication and mention of the grant of the patent: **09.08.2006**
(21) Application number: 03737212.5
(22) Date of filing: 09.05.2003
(51) Int. Cl.: F16M 7/00, F16P 1/02

(54) **MODULAR MOUNTING SYSTEM**
MODULARE HALTEVORRICHTUNG
SYSTEME DE MONTAGE MODULAIRE

(30) Priority: 09.05.2002 ZA 200203682
(43) Date of publication of application: 02.02.2005
(73) Proprietor: Oscillating Systems (PTY) Limited, Pretoria 0184 (ZA)
(72) Inventor: SEVENSTER, Conrad, Centurion, 0042 Pretoria (ZA)
(74) Representative: Bates, Philip Ian
(86) International application number: PCT/ZA2003/000061
(87) International publication number: WO 2003/095888

(56) References cited:
- EP-A- 0 501 256
- DE-U- 29 520 738
- GB-A- 206 864
- GB-A- 533 714
- US-A- 2 014 466
- US-A- 3 477 670
- US-A- 3 586 271
- US-A- 3 588 009

## Description

### TECHNICAL FIELD

This invention relates to a modular mounting system suitable for supporting a mechanical power transmission system in use. More particularly, but without being limited thereto, the invention relates to a modular mounting system suitable for mounting a drive means, such as an electrical motor, and a driven means, such as a pump, in various mechanical configurations relative to each other such that the respective drive and driven shafts are always in alignment.

### BACKGROUND ART

Mechanical power transmission systems for driving pumps, crushers, floatation cells and the like often comprise driving means, such as an electrical motor including a driver pulley; and driven means, such as a driven pulley that is connected to the pump, crusher, floatation cell or the like to be driven. The driver and driven pulleys are generally operatively associated with one another by means of at least one intermediate belt extending between the pulleys for transmitting mechanical power from the driver to the driven pulley.

It will be appreciated that it is an essential requirement for proper working of any mechanical power transmission system that the drive shaft of the driver pulley remains in constant alignment with the driven shaft of the driven pulley during operation of the mechanical power transmission system. Failure to maintain the drive and driven shafts in alignment would inevitably result in slacking of the belt, change in power load, and non-optimal functioning of the system as a whole.

A mechanical power transmission system for driving pumps, for example, generally comprises at least one electrical motor and at least one pump arranged in mechanical communication with the motor by means of the intermediate belt. Each motor-and-pump configuration is unique and is dependent, inter alia, on the size of the pump, the motor frame size, and available floor space at the site where the configuration is erected.

For space-saving reasons, the motor is generally mounted in an overhead-type configuration relative to the pump, in which the pump is typically secured to the ground. According to one known mounting configuration, a motor support frame including a motor support platform is erected over the pump such that the motor support platform is arranged in vertical spaced orientation above the pump. The motor is then mounted to the motor support platform by means of bolts or the like fastening means such that the motor drive shaft and pump driven shaft are arranged in alignment. According to another mounting system, the motor may be located in an overhead-type configuration relative to the pump by means of a number of jacking bolts extending between a pump support base and the motor support platform.

One of the disadvantages of known motor-and-pump mounting systems is that it is often difficult to mount the motor on the support platform in such a way that the drive and driven shafts of the motor and pump respectively are in alignment with each other for effecting a straight belt path between the same.

Another disadvantage is to adjust the motor support platform relative to the pump such that the motor drive shaft is arranged in parallel orientation relative to the driven shaft of the pump, the difficulty being that if the drive and driven shafts are even slightly angularly orientated relative to each other, the system does not operate efficiently and belt wear increases exponentially. This is particularly problematic in those cases where the motor support platform is supported above the pump on jacking bolts, where an operator is required manually to adjust each of the jacking bolts until the drive and driven shafts are not only perfectly aligned, but are also in perfect parallel orientation, and the belt extending between the two is optimally tensioned.

Yet a further disadvantage is the lack of accessibility to the motor and/or pump and its associated components for maintenance and repair purposes. Known mounting systems are unwieldy, the designs of which provide only limited access to the system components once the system has been erected, which results in problematic, time-consuming and consequently often expensive maintenance and/or replacement procedures.

A further disadvantage is the requirement that a unique motor-and-pump mounting configuration is required and must be built individually for each motor-and-pump combination. Because of the custom-built nature of conventional mounting arrangements for mechanical power transmission systems, a user who elects to change its motor and/or pump sizes, would be obliged also to change the mounting system on which these components are mounted, since the mounting system for one motor-and-pump-arrangement would not be suitable for use with a bigger or smaller, as the case may be, motor-and-pump-arrangement. Naturally, this requirement to have a new mounting system designed, built and erected not only increases erection and general operation costs, but also causes delays in operating times.

Yet a further difficulty experienced with conventional mounting configurations is that the load path is defined through an external foundation. The problem with such an "external" load path is that the foundation becomes dislodged during use, which requires larger and heavier foundations to prevent such dislodgement and to maintain the drive and driven means in position relative to each other in use, which again increases erection costs and times.
GB 206864 discloses a modular mounting system.

### OBJECT OF THE INVENTION

It is accordingly an object of the present invention to provide a novel mounting system suitable for supporting drive and driven means of a mechanical power transmission system that will overcome or at least minimize some of the disadvantages associated with mounting systems of this kind.

It is a further object of the invention to provide a mounting system suitable for a mechanical power transmission system, which enables relatively easy mounting of a drive means and driven means such that the respective drive and driven shafts are both aligned and orientated parallel to each other so as to effect a straight belt path between the shafts.

It is yet a further object of the invention to provide a mounting system suitable for a mechanical power transmission system, which enables unhindered access to the drive and driven means, once the system has been erected, for maintenance, repair and/or replacement purposes.

It is yet a further object of the invention to provide a mounting system suitable for a mechanical power transmission system that can be altered to adapt the same mounting system for various motor-and-pump configurations.

### DISCLOSURE OF THE INVENTION

According to the invention there is provided a mounting system suitable for mounting drive and driven means [2, 4] of a mechanical power transmission system relative to each other, the mounting system comprising a set of modules including a driven means support base [10] having at least one base platform [16] for supporting the driven means [4] thereon' and a drive means support base [30, 50, 70, 84, 130] having a drive beam [34, 52, 74, 88, 132] and a drive means receiving platform [36, 56, 76, 138] on which the drive means [2] is mounted, the drive means receiving platform being mechanically linked to the drive beam [34, 52, 74, 86, 132]; characterised in that the drive means receiving platform is pivotally displaceable relative to the drive beam [34, 52, 74, 86, 132] and/or linearly displaceable parallel to the longitudinal axis of the drive beam [34, 52, 74, 86, 132] such that the drive means receiving platform [36, 56, 76, 138] is displaceable relative to the base platform [16]; the drive means support base [30, 50, 70, 84, 130] being disconnectably and interchangeably connectable to the driven means support base [10] and being connectable in a first overhead configuration, in which the drive beam [74, 86, 132] is orientated vertically upright in a plane substantially perpendicular to the plane of the base platform [16] such that the drive and driven means [2, 4] are vertically spaced, and being reconnectable to each other in a second alongside configuration, in which the drive beam [34, 52, 132] is orientated in substantially the same plane as the base platform [16] such that the drive and driven means [2, 4] are horizontally spaced, the arrangement being such that a drive shaft [3] and a driven shaft [5] of the drive and driven means [2, 4] are aligned and orientated parallel to each other in use, and particularly such that shaft shoulders of the drive and driven shafts [3, 5] are aligned in anyone of the mounting configurations so as to ensure a straight belt path between the two shafts at all times.

The driven means support base may removably be securable to the ground or a like rigid surface and may include at least one base platform for supporting the driven means thereon; and engagement means for permitting releasable engagement with the drive means support base. In one form of the invention the driven means support base also may include two opposed side plates and two opposed end plates connected to and extending from the base platform.

The drive means support base may disconnectably be connected either to the ground or a like rigid surface approximate the driven means support base, or to the driven means support base itself and particularly to anyone of the opposed side plates or end plates of the driven means support base. The drive means support base may include a drive beam; at least one mounting plate connected to the drive beam and dimensioned releasably to engage either of the side plates or end plates of the driven means support base; and a drive means receiving platform mechanically linked to the drive beam and suitably dimensioned for receiving the drive means thereon. In one form of the invention the drive means support base may include at least one end-mounting plate connected to an end of the drive beam and at least one side-mounting plate connected to a side of the drive beam.

The drive means receiving platform may be both pivotally displaceable relative to the drive beam, and linearly displaceable parallel to the longitudinal axis of the drive beam.

In one embodiment of the invention the drive beam may comprise of a telescopic shaft and sleeve arrangement. In this embodiment, the drive means receiving platform may be mechanically associated with the telescopic shaft and sleeve arrangement, the arrangement being such that the drive means receiving platform is movable along the longitudinal axis of the drive beam and linearly relative to the base platform through telescoping the drive beam. Telescoping of the shaft and sleeve arrangement of the drive beam may be achieved by means of a threaded rod or the like mechanical adjustment means located in the drive beam; or by means of a hydraulic cylinder arranged within the drive beam for telescoping the same.

The drive means support base may be mounted relative to the driven means support base either in an overhead configuration, in which the drive beam is orientated vertically upright in a plane substantially perpendicular to the plane of the base platform; or in an alongside configuration, in which the drive beam is orientated in substantially the same plane as the base platform. The arrangement may be such that when the drive means support base and driven means support base are orientated in the overhead configuration, the drive means and driven means are substantially vertically spaced from each other, while in the alongside configuration, the drive and driven means are substantially horizontally spaced from each other.

In a preferred embodiment of the invention, the same drive means support base may be mounted relative to the driven means support base in either one of the overhead or alongside configurations. However, in an alternative embodiment, the drive means support base may be selected from one of two designs, namely an overhead drive means support base ("overhead base") and an alongside drive means support base ("alongside base").

The drive means support base may include tensioning means, which may be connected to the drive means receiving platform. The tensioning means may be movable between a tensioned and a substantially non-tensioned position such that in the tensioned position it is biased to the non-tensioned position for moving the drive means support base. Particularly, when the tensioning means is in the tensioned position in use, the belt may optimally be tensioned between the drive and driven means, and when the tensioning means is in the substantially non-tensioned position, the belt may non-optimally be tensioned.

The tensioning means may be resilient biasing means that is flexible between a tensioned and substantially non-tensioned position. The resiliently flexible biasing means may be any suitable spring, torsion element or the like, such as a Neidhart unit. It will be appreciated that the Neidhart unit is a torsion element comprising an elongate shaft trapped within a concentrically orientated elongate sleeve, together with a number of resiliently flexible elements located intermediate an outside of the shaft and an interior face of the sleeve. The shaft and the sleeve, which are generally of triangular or square cross-section, are longitudinally off-set relative to each other by approximately 60° (for triangular cross-section) or 45° (for square cross-section), thus defining either three or four elongate bores intermediate the shaft and the sleeve. The resiliently flexible elements, which are generally elongate rubber elements, are located in these bores, the arrangement being such that when the shaft is rotated about its longitudinal axis relative to the sleeve the elements are substantially resiliently deformed, thus creating rotational tension on the shaft in an opposite direction.

The modular mounting system may include pre-stressing means adapted for effecting displacement of the drive means receiving platform relative to the base platform for manipulating distance between drive and driven means mounted on these respective platforms, thereby manipulating belt tension of a belt extending between the drive and driven means in use. The pre-stressing means may be adapted to move the drive means receiving platform while at the same time moving the tensioning means towards its tensioned position.

In one form of the invention, the pre-stressing means may be a hydraulically operable arm pivotally connected at one end thereof to the drive beam and pivotally connected at an opposite end thereof to the drive means receiving platform, the arrangement being such that extension and retraction of the hydraulic arm effects pivoting of the drive means receiving platform about the drive beam.

The modular mounting system may be characterised therein that the pre-stressing means is self-adjusting and adapted for continuously moving at least the drive means receiving platform substantially immediately upon occurrence of belt slacking while the belt is running. The modular mounting system may further be characterised therein that drive means receiving platform is manually adjustable relative to the driven means support base while the belt is running.

The modular mounting system further may include a Z-adapter base which is locatable intermediate the drive means support base and the driven means support base such that the drive means support base and the driven means support base are arranged relative to each other in a Z-configuration.

The Z-adapter base may be locatable between the drive and driven means support bases either in a Z-overhead configuration, in which the drive beam is orientated vertically upright in a plane substantially perpendicular to the plane of the base platform; or in a Z-alongside configuration, in which the drive beam is orientated in substantially the same plane as the base platform. More particularly, in the Z-overhead configuration the side-mounting plate of the drive means support base is connected to the Z-adapter base, which in turn is connected to the driven means support base in such a way that the drive means and driven means are substantially vertically spaced from each other in a Z-configuration; whereas in the Z-alongside configuration the end-mounting plate of the drive means support base is connected to the Z-adapter base, which in turn is connected to the driven means support base such that the drive and driven means are substantially horizontally spaced from each other in a Z-configuration.

The Z-adapter base may include a base plate orientated in substantially the same plane as the base platform, two opposed side plates and two opposed end plates connected to the base plate, and engagement means suitable for engaging the drive and driven means support bases. The drive and driven means support bases may disconnectably be connected to the Z-adapter base such that the drive means support base is connected to either one of the side or end plates of the Z-adapter base, while the driven means support base is connected to either one of the other of the end or side plates of the Z-adapter base, as the case may be. So, for example, if the drive means support base is connected to a side plate of the Z-adapter base, then the driven means support base is connected to one of the end plates of the Z-adapter base.

In a preferred form of the invention the mounting system may thus comprise of three basic modules which are disconnectably connectable to each other, namely the drive means support base; the driven means support base; and the Z-adapter base. These modules may engage each other either in one of the standard configurations, which is characterised therein that the drive means support base is connected directly to the driven means support base; or in one of the Z-configurations, which is characterised therein that the drive means support base is connected to the Z-adapter base, which in turn is connected to the driven means support base.

Furthermore, the standard configurations may include the standard overhead configuration, where the drive means support base is mounted to the driven means support base such that the drive beam is orientated vertically upright in a plane substantially perpendicular to the plane of the base platform; or in a standard alongside configuration, in which the drive beam is orientated in substantially the same plane as the base platform.

Similarly, Z-configurations may include the Z-overhead configuration in which the side-mounting plate of the drive means support base is connected to the Z-adapter base, which in turn is connected to the driven means support base in such a way that the drive means and driven means are substantially vertically spaced from each other in a Z-configuration; and the Z-alongside configuration in which the end-mounting plate of the drive means support base is connected to the Z-adapter base, which in turn is connected to the driven means support base such that the drive and driven means are substantially horizontally spaced from each other in a Z-configuration.

The modular mounting system also may include at least one belt guard to prevent injury to operators. The belt guard, which is adapted at least partially to cover the belt extending between the drive and driven means, may include at least two opposed parallel sidewalls spaced from each other to define a belt path between them suitable for housing the belt and is characterised therein that it provides access to the belt in use. The belt guard is releasably connected to either one or both of the drive and driven means support bases.

According to another aspect of the invention there is provided a drive means support base suitable for cooperating with a driven means support base in a modular mounting system, the drive means support base comprising a drive beam; mounting means connected to the drive beam for mounting the drive means support base either to the ground or the like rigid surface, or to the driven means support base; and a drive means receiving platform mechanically linked to the drive beam and suitably dimensioned for receiving the drive means thereon.

The drive means support base may include tensioning means connected to the drive means receiving platform and movable between a tensioned and a substantially non-tensioned position such that in the tensioned position it is biased to the non-tensioned position for moving the drive means receiving platform.

The drive means support base also may include pre-stressing means. The pre-stressing means may be adapted for effecting displacement of the drive means receiving platform relative to the driven means support base for manipulating distance between drive and driven means respectively mounted on the drive means receiving platform and the driven means support base, thereby manipulating belt tension of a belt extending between the drive and driven means in use. The pre-stressing means may be adapted to move the drive means receiving platform while at the same time moving the tensioning means towards its tensioned position.

According to another aspect of the invention there is provided a Z-adapter base suitable for use in a modular mounting system, the Z-adapter base being locatable intermediate a drive means support base and a driven means support base such that the drive and driven means support bases are arranged relative to each other in a Z-configuration.

The Z-adapter base may include a base plate, two opposed side plates and two opposed end plates connected to the base plate, and engagement means suitable for engaging the drive and driven means support bases. The drive and driven means support bases may disconnectably be connected to the Z-adapter base such that the drive means support base is connected to either one of the side or end plates of the Z-adapter base, while the driven means support base is connected to either one of the other of the end or side plates of the Z-adapter base, as the case may be.

### SPECIFIC EMBODIMENT OF THE INVENTION

Without limiting the scope thereof, the invention will now further be described in light of the following examples and with reference to the accompanying drawings wherein -
- Figure 1 (a): is an isometric view from one end of a driven means support base according to one embodiment of the invention;
- Figure 1(b): is an isometric view from the opposite end of the driven means support base of Figure 1(a);
- Figure 1(c): is an isometric view of a driven means support base according to an alternative embodiment of the invention;
- Figure 2(a): is an isometric view of an alongside drive means support base ("alongside base") according to one embodiment of the invention, wherein the alongside base is suitable for accommodating drive means of larger frame sizes;
- Figure 2(b): is an isometric view of the alongside base of Figure 2(a) illustrating alternative possible positions of the pre-stressing means and the drive means receiving platform on the drive beam;
- Figures 2(c): are side view illustrations of the alongside base of Figures 2(a) and 2(b),
- and 2(d): illustrating working of the pre-stressing means and the pivoting action of the drive means receiving platform;
- Figure 3: is an isometric view of an alongside drive means support base ("alongside base") according to an alternative embodiment of the invention, wherein the alongside base is suitable for accommodating drive means of smaller frame sizes;
- Figure 4: is an isometric view of an overhead drive means support base ("overhead base") according to one embodiment, wherein the overhead base is suitable for accommodating drive means of larger frame sizes;
- Figure 5: is an isometric view of an overhead drive means support base ("overhead base") according to an alternative embodiment, wherein the overhead base is suitable for accommodating drive means of smaller frame sizes;
- Figure 6(a): is an isometric view from one end of a Z-adapter base according to one embodiment of the invention;
- Figure 6(b): is an isometric view from the opposite end of the Z-adapter base of Figure 6(a);
- Figure 6(c): is an isometric view of a Z-adapter base according to an alternative embodiment of the invention;
- Figure 7(a): is an isometric view of an alongside base according to one embodiment of the invention, connected to a side plate of a driven means support base in a so-called "standard alongside configuration";
- Figure 7(b): is an isometric view of the standard alongside configuration of Figure 7(a) with a motor and pump mounted respectively to the drive means support base and the driven means support base;
- Figure 8(a): is an isometric view of an alongside base according to another embodiment of the invention (i.e. for accommodating drive means of smaller frame sizes) that is connected to a side plate of a driven means support base in a standard alongside configuration;
- Figure 8(b): is an isometric view of the standard alongside configuration of Figure 8(a) with a motor and pump mounted respectively on the drive means support base and the driven means support base;
- Figure 9(a): is an isometric view of an alongside base according to one embodiment of the invention, which is connected to a driven means support base by means of an intermediately located Z-adapter base in a so-called "Z-alongside configuration";
- Figure 9(b): is an isometric view of the Z-alongside configuration of Figure 9(a) with a motor and pump mounted respectively to the drive means support base and the driven means support base;
- Figure 10(a): is an isometric view of an alongside base according to another embodiment of the invention (i.e. for accommodating drive means of smaller frame sizes), which is connected to a driven means support base in a Z-alongside configuration;
- Figure 10(b): is an isometric view of the Z-alongside configuration of Figure 10(a) with a motor and pump mounted respectively to the drive means support base and the driven means support base;
- Figure 11 (a): is an isometric view of an overhead base according to one embodiment of the invention that is connected to a side plate of a driven means support base in a so-called "standard overhead configuration";
- Figure 11 (b): is an isometric view of the standard overhead configuration of Figure 11 (a) with a motor and pump mounted respectively to the overhead base and the driven means support base;
- Figure 11 (c): is a partially sectioned isometric rear view of the standard overhead configuration of Figures 11 (a) and (b), illustrating the hydraulic cylinder in the telescopic drive beam;
- Figure 12(a): is an isometric view of an overhead base according to another embodiment of the invention (i.e. for accommodating drive means of smaller frame sizes) that is connected to a side plate of a driven means support base in a standard overhead configuration;
- Figure 12(b): is an isometric view of the standard overhead configuration of Figure 12(a) with a motor and pump mounted respectively to the overhead base and the driven means support base;
- Figure 12(c): is an isometric view from below of the standard overhead configuration of Figures 12(a) and (b), illustrating the tensioning means;
- Figure 12(d): is a partially sectioned isometric rear view of the standard overhead configuration of Figures 12(a) to (c), illustrating the threaded rod pre-stressing means;
- Figure 13(a): is an isometric view of an overhead base according to one embodiment of the invention, which is connected to a driven means support base by means of an intermediately located Z-adapter base in a so-called "Z-overhead configuration";
- Figure 13(b): is an isometric view of the Z-overhead configuration of Figure 13(a) with a motor and pump mounted respectively to the overhead base and the driven means support base;
- Figure 14(a): is an isometric view of an overhead base according to another embodiment of the invention (i.e. for accommodating drive means of smaller frame sizes), which is connected to a driven means support base in a Z-overhead configuration;
- Figure 14(b): is an isometric view of the Z-overhead configuration of Figure 14(a) with a motor and pump mounted respectively to the overhead base and the driven means support base, also illustrating a belt guard mounted to the driven means support base;
- Figure 15(a): is an isometric view of a drive means support base which is adapted to work in either one of an overhead or alongside configuration relative to the driven means support base, Figure 15(a) illustrating the positioning of the drive means support base when it is used in the overhead configuration;
- Figure 15(b): is a side view of the drive means support base of Figure 15(a) with the hydraulic pre-stressing arm in an extended position;
- Figure 15(c): is an isometric view of the drive means support base of Figure 15(a) and (b), illustrating positioning of the drive means support base, and an alternative orientation of the drive means receiving platform, when this support base is used in the alongside configuration;
- Figure 16(a): is an isometric view of the drive means support base of Figure 15(c) and the driven means support base of Figure 1 (c) that are connected to each other in a first possible standard alongside configuration, and also illustrates an embodiment of a belt guard according to the invention;
- Figure 16(b): is an isometric view of the drive means support base of Figure 15(c) and the driven means support base of Figure 1(c), which are now connected to each other in a second possible standard alongside configuration;
- Figure 17(a): is an isometric view of the drive means support base of Figures 15(a) and (b) and the driven means support base of Figure 1 (c), connected to each other in a first possible standard overhead configuration, and also illustrates an alternative embodiment of a belt guard;
- Figure 17(b): is an isometric view of the drive means support base of Figures 15(a) and (b) and the driven means support base of Figure 1 (c), which are connected to each other in a second possible standard overhead configuration;
- Figure 18(a): is an isometric view of the drive means support base of Figure 15(c), the driven means support base of Figure 1(c), and the Z-adapter base of Figure 6(c), all connected to each other in a first possible Z-alongside configuration;
- Figure 18(b): is an isometric view of the drive means support base of Figure 15(c), the driven means support base of Figure 1(c), and the Z-adapter base of Figure 6(c), which are connected to each other in a second possible Z-alongside configuration;
- Figure 19(a): is an isometric view of the drive means support base of Figures 15(a) and (b), the driven means support base of Figure 1 (c), and the Z-adapter base of Figure 6(c), all connected to each other in a first possible Z-overhead configuration; and
- Figure 19(b): is an isometric view of the drive means support base of Figures 15(a) and (b), the driven means support base of Figure 1(c), and the Z-adapter base of Figure 6(c), connected to each other in a second possible Z-overhead configuration.

The modular mounting system according to the invention is adapted for mounting a drive means 2, such as an electrical motor, and a driven means 4, such as pump, of a mechanical power transmission system in various configurations relative to each other. The modular mounting system is not only aimed at facilitating easy access to the drive means 2 and driven means 4 in use and at facilitating easy alignment of the drive shafts 3 and driven shafts 5 during assembling, but also at providing a standard system comprising a number of disconnectably connectable modules that are adapted to engage each other in various configurations in order to create a variety of assembly configurations on site to accommodate different site requirements and operational demands.

The modular mounting system comprises a driven means support base 10 and at least one drive means support base. The driven means support base 10 includes two opposed side plates 12.1, 12.2; two opposed end plates 14.1, 14.2; and a base platform 16 for supporting the drive means 2 thereon. The side plates 12.1, 12.2 and the end plates 14.1, 14.2 each include a number of locating apertures 13 for receiving bolts, pegs, pins or like fasteners therethrough.

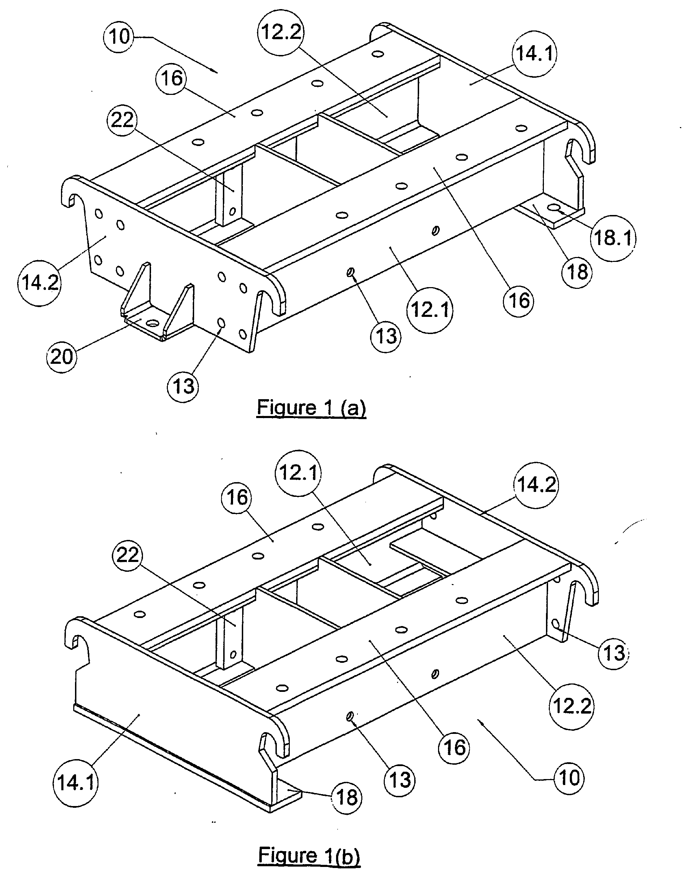

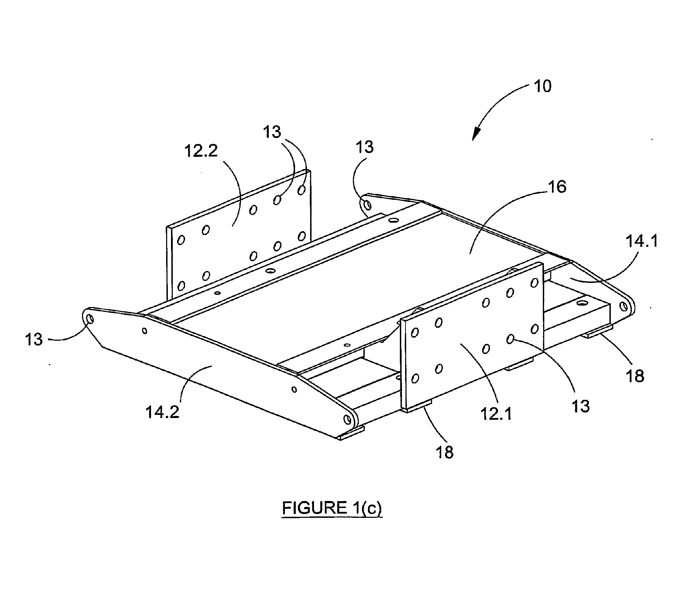

The driven means support base 10 also includes at least one mounting plate 18, which is connected to an end plate 14.1 in the embodiment in Figures 1(a) and (b), and to the base platform 16 in Figure 1(c), and which includes a number of apertures 18.1 for accommodating bolts, pegs pins or the like connecting means therethrough for securing the driven means support base 10 to the ground or a like rigid surface in use.

Connected to the opposite end plate 14.2 [see embodiment in Figure 1(a)], the driven means support base 10 includes a mounting bracket 20. The driven means support base 10 also includes a number of reinforcing nut plates 22 connected to an inner surface of the side plates 12.1, 12.2 for reinforcing the side plates 12.1, 12.2 and the locating apertures 13.

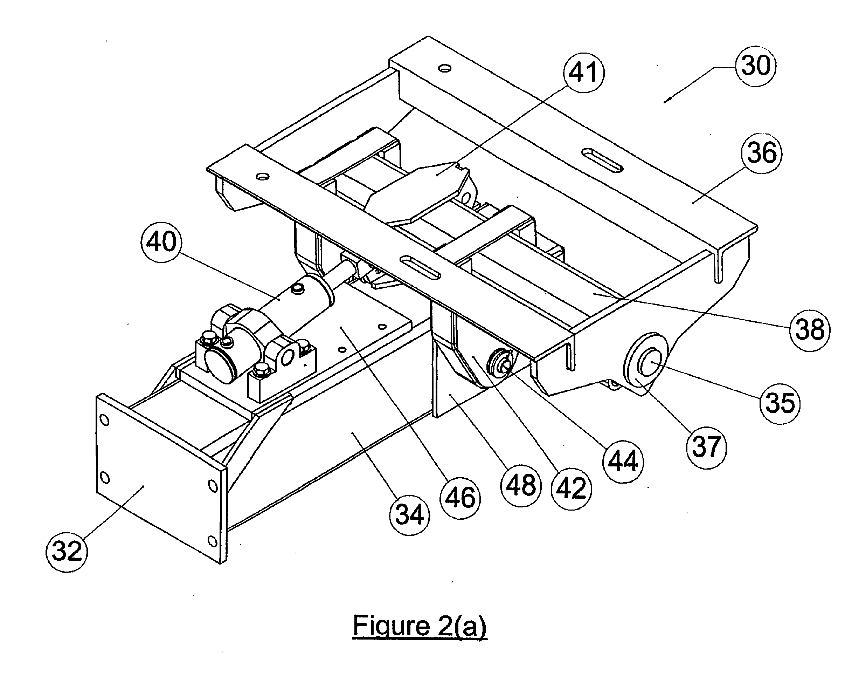

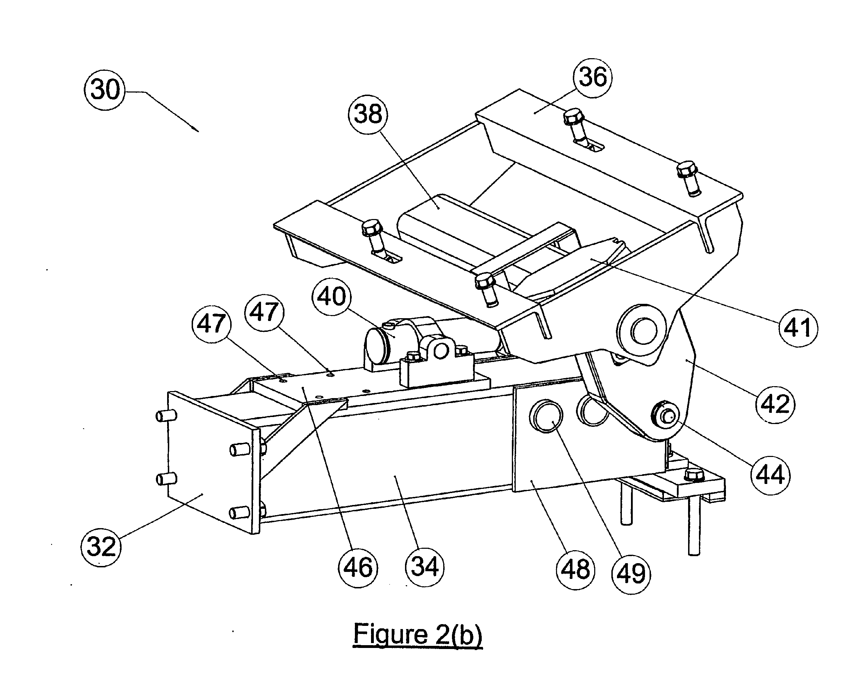

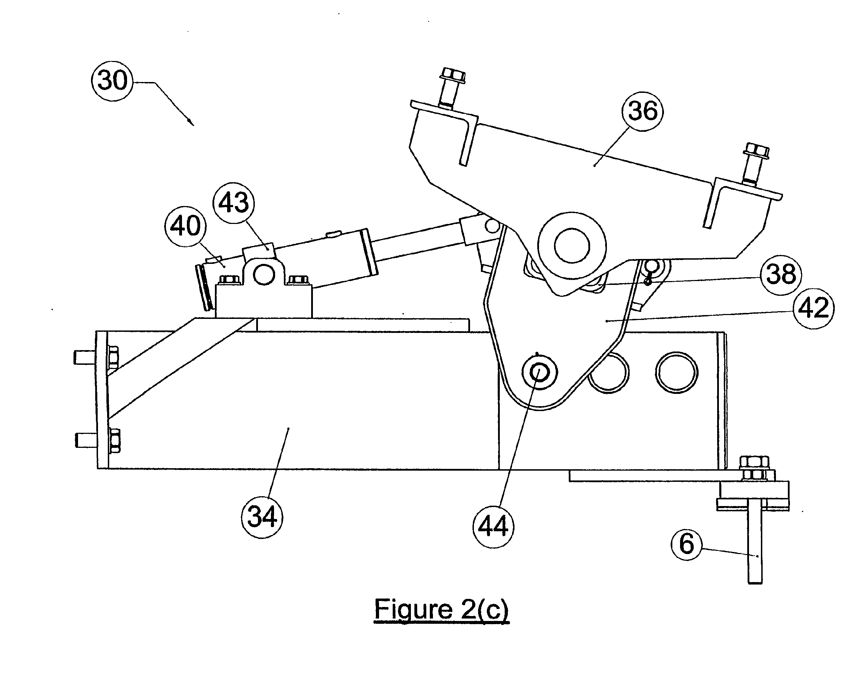

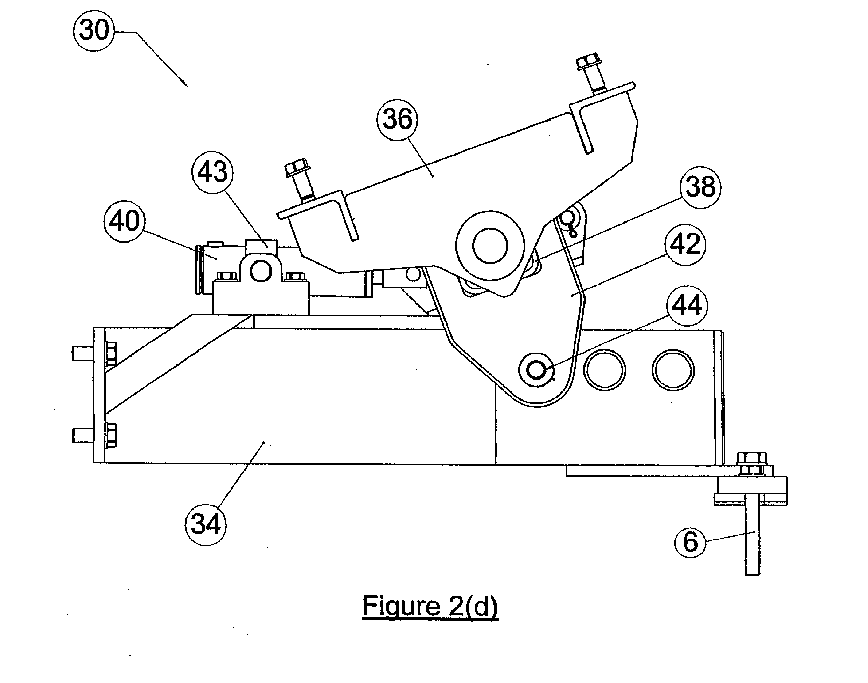

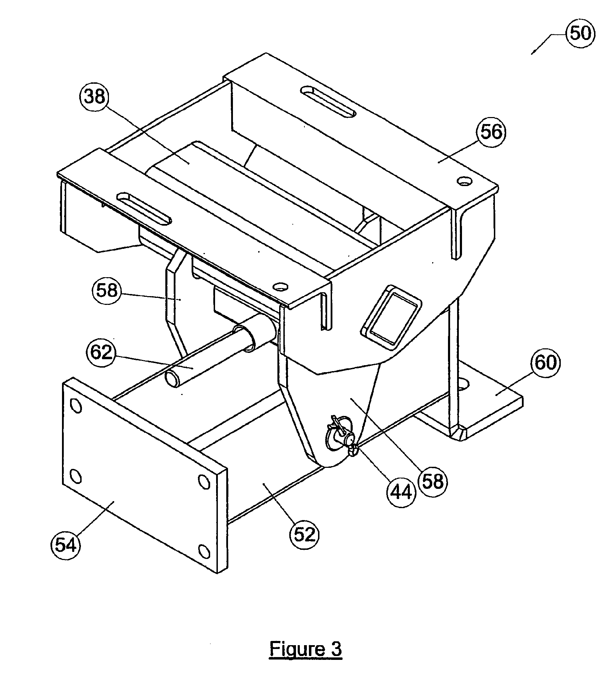

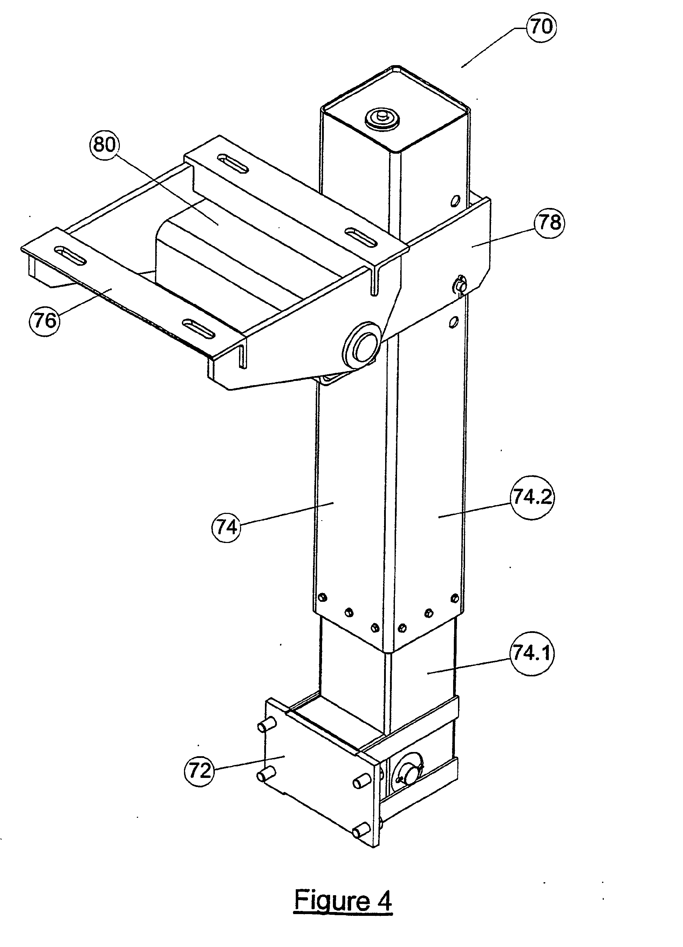

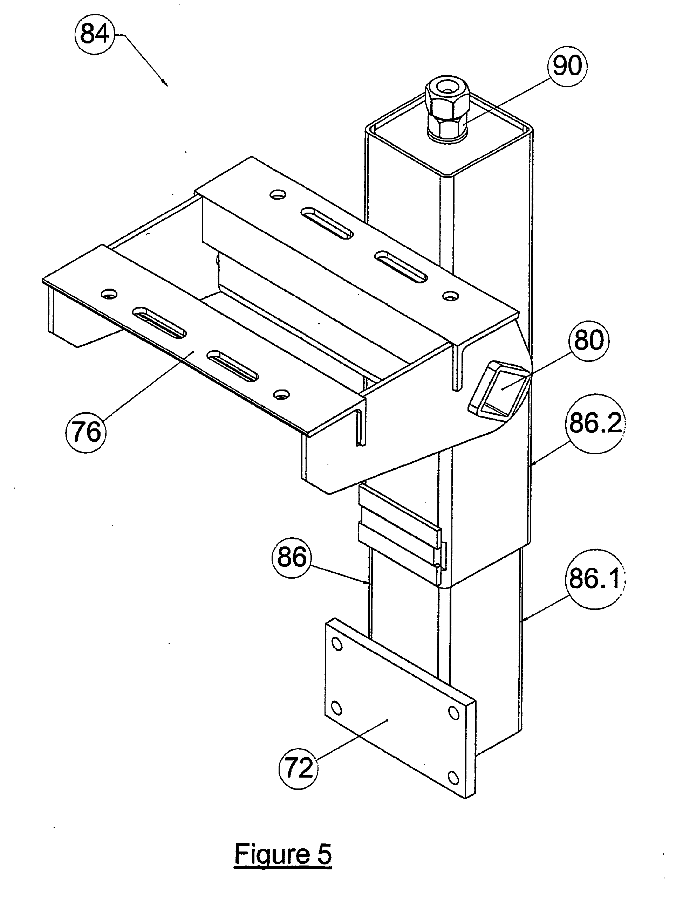

The invention also provides for a drive means support base. In one form of the invention, the modular mounting system includes an alongside drive means support base or so-called "alongside base" 30, as illustrated in Figures 2 and 3, which is mounted in an alongside configuration relative to the driven means support base 10. In an alternative or additional form of the invention, the modular mounting system includes an overhead drive means support base or so-called "overhead base" 70, as illustrated in Figures 4 and 5, which is mounted in an overhead configuration relative to the driven means support base 10. The drive means support base is particularly adapted for receiving an industrial a-synchronous squirrel-cage electrical motor.

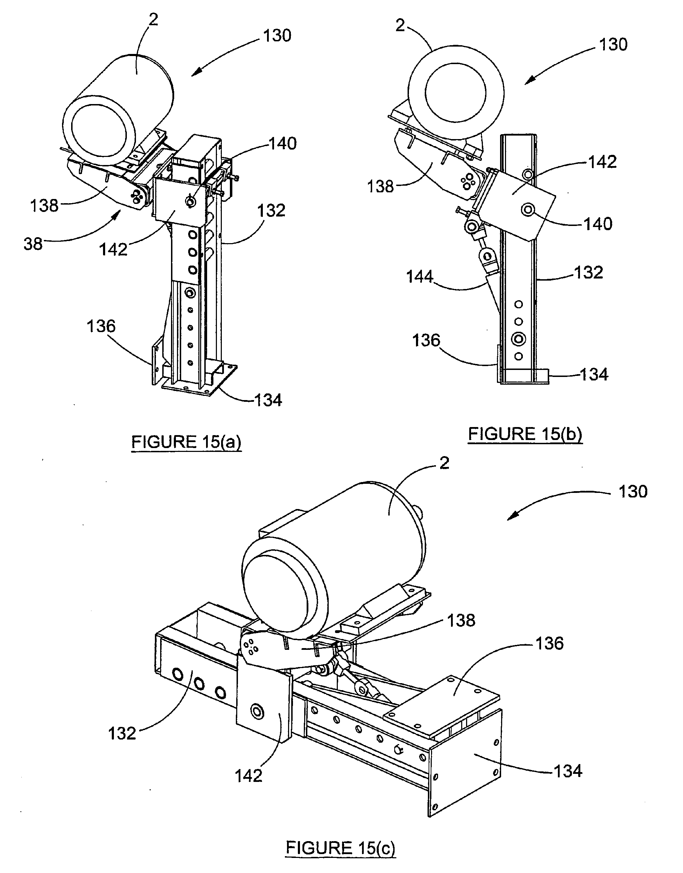

The drive means support base illustrated in Figures 15 to 19, which is a more preferred embodiment of the invention and which is discussed in more detail hereunder, is adapted to be used either in an alongside or an overhead configuration and accordingly alleviates the need for the two separate alongside and overhead bases illustrated in Figures 1 to 5, although the principles applied in the embodiments of Figures 1 to 5 and 15 are the same.

Referring first to the alongside base 30 illustrated in Figures 2(a) to (d), the alongside base 30 is disconnectably connectable to the driven means support base 10 so as to define a closed load path between the drive and driven means. By connecting the drive and driven means support bases to each other, the applicant has overcome the difficulties experienced with conventional mounting configurations where the load path is defined through an external foundation.

The alongside base 30 includes a drive beam 34; an end-mounting plate 32 connected to one end of the drive beam 34 and dimensioned releasably to engage either of the side plates 12.1, 12.2 of the driven means support base 10; and a drive means receiving platform 36 which is mechanically linked to the drive beam 34 and suitably dimensioned for receiving the drive means 2 thereon.

The alongside base 30 includes tensioning means 38 which is movable between a tensioned and a substantially non-tensioned position such that in the tensioned position it is biased to the non-tensioned position for moving the alongside base 30. The tensioning means 38 is a Neidhart unit that is connected at both ends thereof to the drive means receiving platform 36 by means of a plug 35 and shear washer 37.

The drive means receiving platform 36 is displaceable relative to both the base platform 16 and the drive beam 34. More particularly, the alongside base 30 includes pre-stressing means 40 in the form of a hydraulically operable arm, which is pivotally connected at one end thereof to the drive beam 34 and pivotally connected at an opposite end thereof to the tensioning means 38 and the drive means receiving platform 38 by means of displacement bracket 41. The hydraulically operable arm 40 is adapted for moving the drive means receiving platform 36 while at the same time moving the tensioning means 38 towards its tensioned position. The hydraulically operable arm 40 can be activated either automatically or manually.

The drive means receiving platform 36 is pivotally connected to the drive beam 34 by means of an intermediate cover plate 42. The cover plate 42 is pivotally connected to the drive beam 34 by pivot pins 44. The cover plate 42 is also connected to the two opposite ends of the Neidhart tensioning means 38, which in turn is connected to the drive means receiving platform 36. The arrangement is such that the drive means receiving platform 36 is pivotable relative to the drive beam 34 at pivot pins 44 and is pivotable in the tensioning means 38 around axis 35.

The pre-stressing means 40 is connected to the drive beam 34 by means of mounting plate 46. Mounting plate 46 includes a few sets of apertures 47 through which mounting bolts or the like fasteners may extend, the arrangement being such that the pre-stressing means 40 is movably connected to the drive beam 34.

Similarly, the cover plates 42 are connected to the drive beam 34 by means of mounting plates 48. The mounting plates 48 each include at least three pin apertures 49 for accommodating the cover plates 42 at various positions on the mounting plates 48.

The drive means receiving platform 36 is transversely mountable to the longitudinal axis of the drive beam 34 in two positions that are 180° opposite to each other. In particular, the drive means receiving platform 36 can be disconnected from the drive beam 34, rotated by 180° and reconnected to the drive beam 34.

Figures 2(c) and 2(d) illustrate working of the alongside base 30, and particularly the characteristic dual pivoting capability of the drive means receiving platform 36. The drive means receiving platform 36 is simultaneously pivotable in the tensioning means 38 around axis 35 and in the pivot pin 44. In Figure 2(c), the pre-stressing means 40 is in an extended condition to effect pre-stressing of a belt (not shown) between the drive means 2 and driven means 4 in use. In Figure 2(d), the pre-stressing means 40 is in a retracted condition such that the belt between the drive means 2 and driven means 4 is in a substantially relaxed condition. As is apparent from the drawings, the pre-stressing means 40 itself is also pivotable within cylinder bracket 43.

The alongside base illustrated in Figure 3 is designated by reference numeral 50 and is dimensioned for accommodating drive means of smaller frame sizes (typically motor frame sizes from 132mm and smaller). The alongside base 50 also comprises a drive beam 52; an end-mounting plate 54; and a drive means receiving platform 56 that is mechanically linked to the drive beam 52. The alongside base 50 further includes a base mounting plate 60 for securing the base 50 to the ground in use.

The tensioning means 38 is a Neidhart unit which is connected at both ends thereof to the drive means receiving platform 56. Two pivot plates 58 are connected to and extend from the tensioning means 38 for pivotally connecting the drive means receiving platform 56 to the drive beam 52 by means of pivot pins 44.

The pre-stressing means of the alongside base 50 illustrated in Figure 3 comprises of a threaded tensioner 62. The threaded tensioner 62 is tensioned by a rotating handle (not seen in the drawing) located at a rear end of the alongside base 50 just above the mounting plate 60.

Reference is now made to the overhead base illustrated in Figure 4. The overhead base is designated by reference numeral 70 and is used for drive means of larger frame sizes (typically 160mm and larger). Similarly to the alongside base, the overhead base 70 is disconnectably connectable to the driven means support base 10 in a number of mounting configurations. The overhead base 70 includes a drive beam 74; a side-mounting plate 72 disposed approximate a side of the drive beam 74 and dimensioned releasably to engage either one of the side plates 12.1, 12.2 of the driven means support base 10; and a drive means receiving platform 76 mechanically linked to the drive beam 74 and suitably dimensioned for receiving the drive means 2 thereon. The drive means receiving platform 76 is connected to and displaceable about a longitudinal axis of the drive beam 74 by means of height adjustment bracket 78.

The overhead base 70 includes tensioning means 80 in the form of a Neidhart unit that is connected at both ends thereof to the drive means receiving platform 76. The tensioning means 80 is movable between a tensioned and a substantially non-tensioned position such that in the tensioned position it is biased to the non-tensioned position for moving the drive means receiving platform 76.

In the overhead base 70 the drive beam 74 comprises of a telescopic shaft 74.1 and sleeve 74.2 arrangement. The drive means receiving platform 76 is mechanically linked to the telescopic shaft 74.1 and sleeve 74.2 arrangement of the drive beam 74 such that the receiving platform 76 is vertically movable relative to the driven means support base 10 about the longitudinal axis of the drive beam 74 by telescoping the shaft 74.1 and sleeve 74.2 arrangement. Telescoping of the drive beam 74 is achieved by means of pre-stressing means.

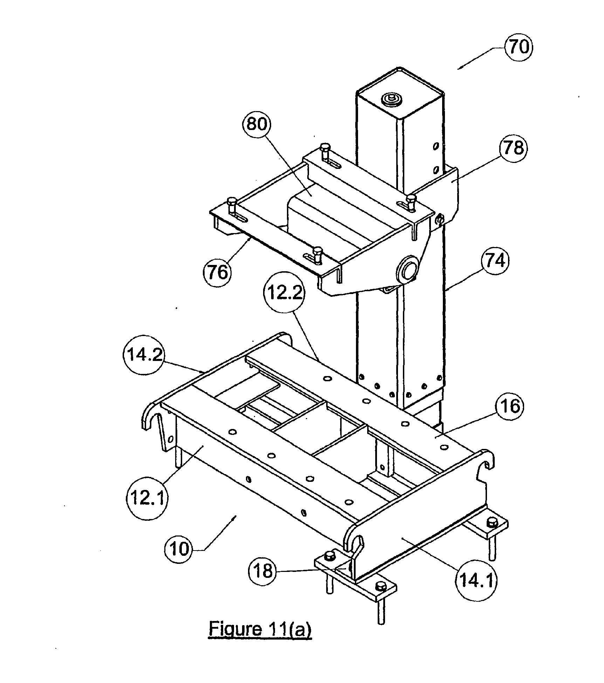

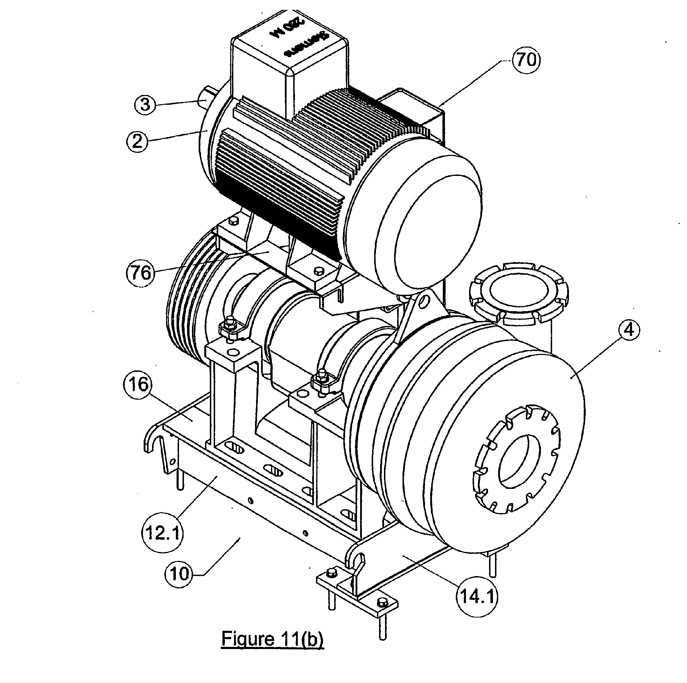

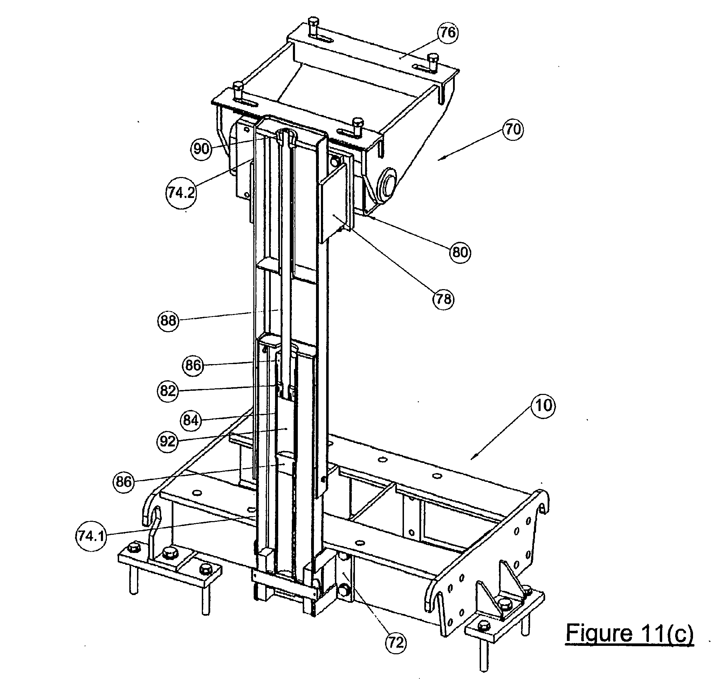

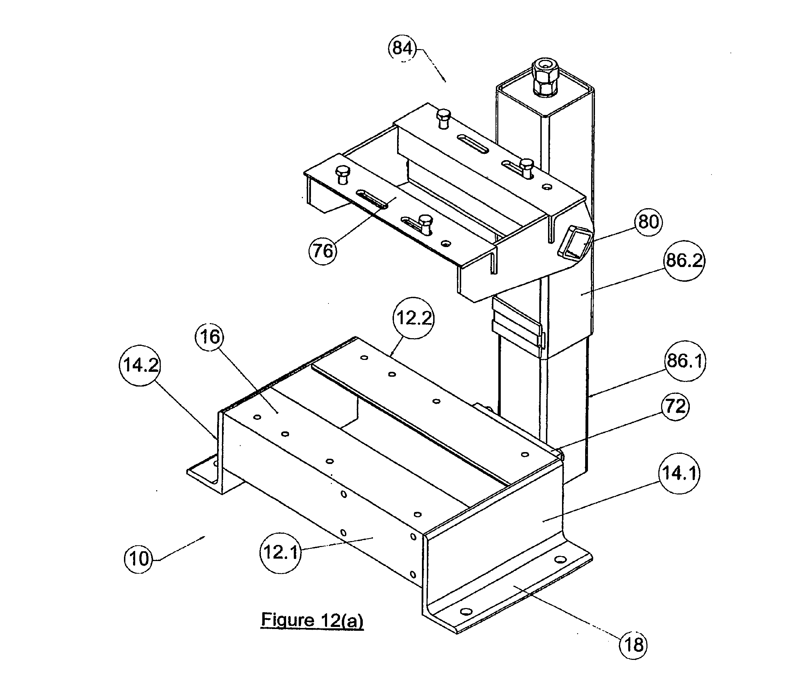

In the embodiment of the invention illustrated in Figure 11 (c) the pre-stressing means includes a hydraulically operable cylinder including a piston 82, which is adapted for effecting telescoping of the drive beam 74. The piston 82 is located in a piston barrel 84 between two plugs 86 which are spaced so as to define a hydraulic fluid chamber 92 between the plugs 86. A piston rod 88, which at its bottom end is arranged in mechanical cooperation with the piston 82, extends through the plug 86 and is connected at its opposite end to a taper-lock bush 90. The hydraulically operable piston arrangement is maintained in the telescopic shaft 74.1 and sleeve 74.2 arrangement of the overhead base drive beam 74 by means of cylinder securing pin 94.

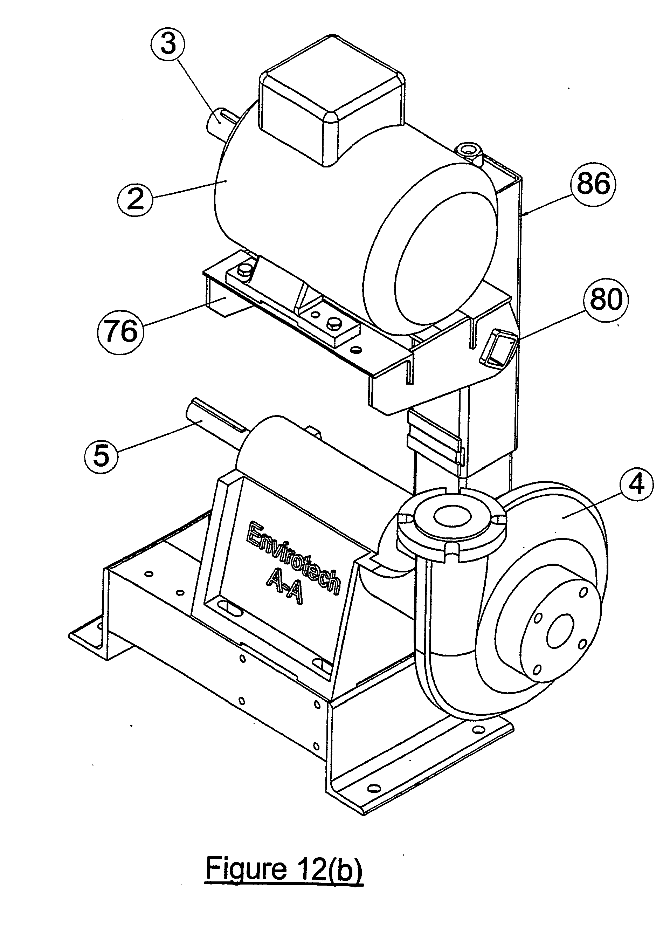

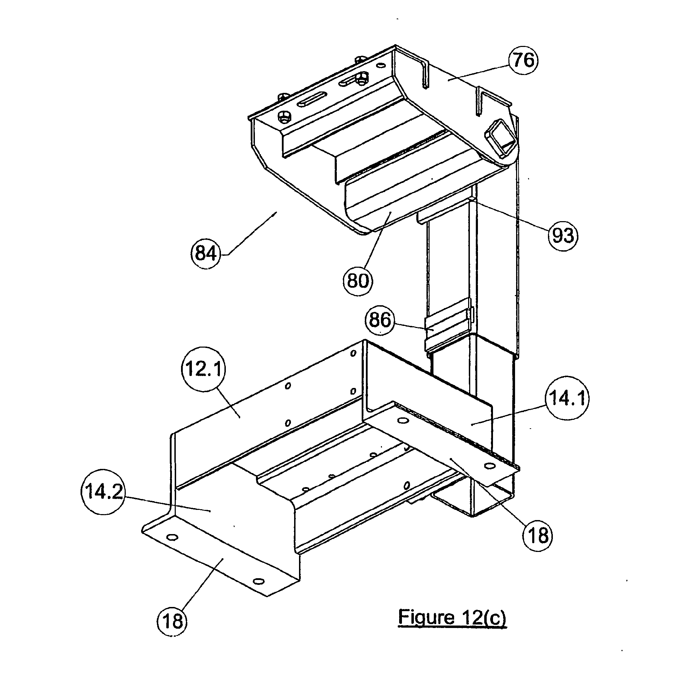

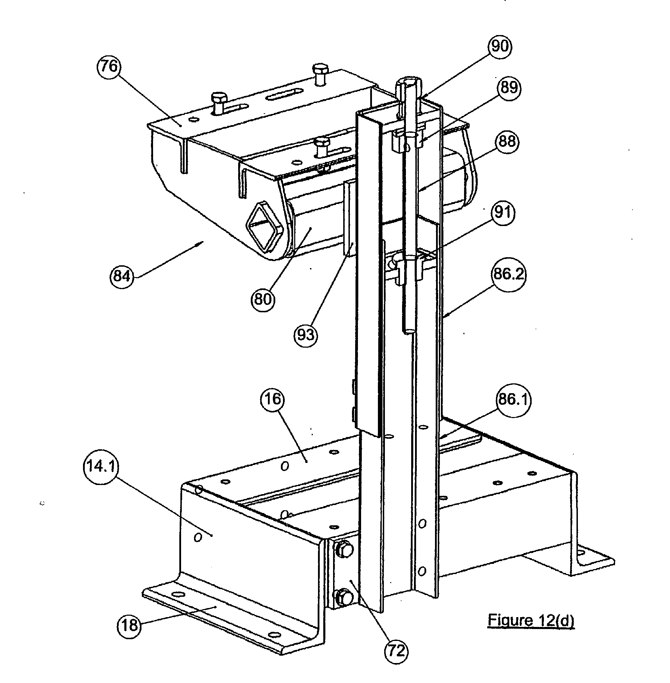

Referring now to Figure 5, the overhead base illustrated in this embodiment is designated by reference numeral 84 and is used for drive means of smaller frame sizes. It also includes a drive beam 86; a side-mounting plate 72 dimensioned releasably to engage the driven means support base 10; and a drive means receiving platform 76 mechanically linked to the drive beam 86 and suitably dimensioned for receiving the drive means 2 thereon. The drive means receiving platform 76 is connected to the drive beam by means of mounting plate 93 [see Figure 12(c)].

The drive beam 86 also comprises of a telescopic shaft 86.1 and sleeve 86.2 arrangement and the drive means receiving platform 76 is mechanically linked to the telescopic shaft 86.1 and sleeve 86.2 arrangement such that the receiving plate 76 is movable relative to the driven means support base 10 by telescoping of the drive beam 86.

Telescoping of the drive beam 86 is achieved by means of pre-stressing means, which in this case is a threaded rod 88 and locking nut 90 arrangement [see Figure 12(d)]. In particular, the threaded rod 88 is co-axially arranged in the drive beam 86. Threaded nut 89 is connected to sleeve 86.2, while threaded nut 91 is connected to shaft 86.1. Telescoping of the drive beam 86 is thus achieved by rotation of the rod 88, which extends through both nuts 89 and 91.

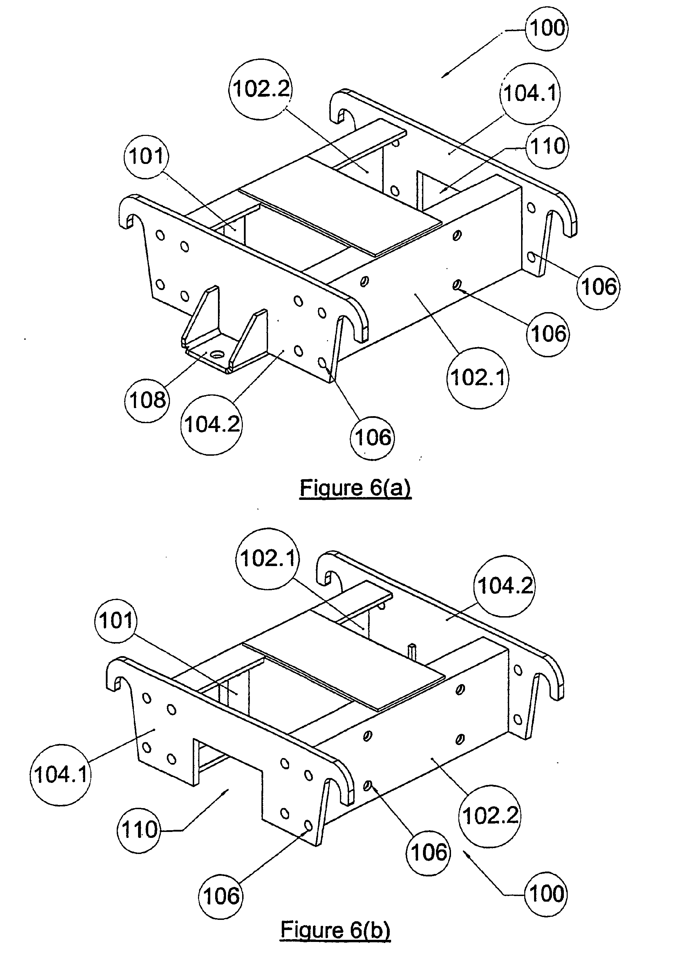

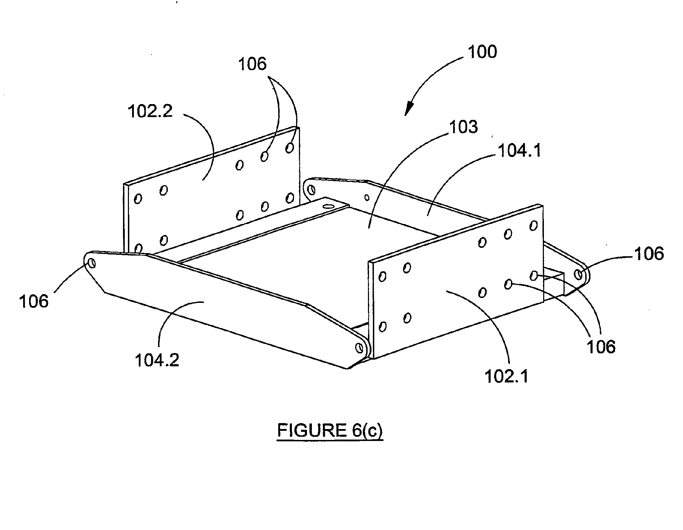

The modular mounting system further includes a Z-adapter base 100 [Figures 6(a) to (c)] which is locatable intermediate the drive means support base 10 and the driven means support base such that the drive means support base 10 and the driven means support base are arranged relative to each other in a Z-configuration. The Z-adapter base 100 includes two opposed side plates 102.1, 102.2; and two opposed end plates 104.1; 104.2. The Z-adapter base 100 of Figure 6(c) also includes a base plate 103. The drive and driven means support bases are disconnectably connected to the Z-adapter base 100 such that a drive means support base is connected to either side plate 102.1, 102.2 of the Z-adapter base 100, while the driven means support base 10 is connected to the end plate 104.1 of the Z-adapter base 100. The Z-adapter base 100 also includes reinforcing nut plates 101 connected to an inner surface of the side plates 102.1, 102.2 for reinforcing the same.

The Z-adapter base 100 further includes a number of locating apertures 106 arranged in the side plates 102.1, 102.2 and end plates 104.1; 104.2 for receiving fastening bolts therethrough. The Z-adapter base 100 also includes a mounting bracket 108 [Figure 6(a)] connected to end plate 104.2, while end plate 104.1 includes a bracket aperture 110 [Figure 6(b)] for accommodating the mounting bracket 20 of the driven means support base 10.

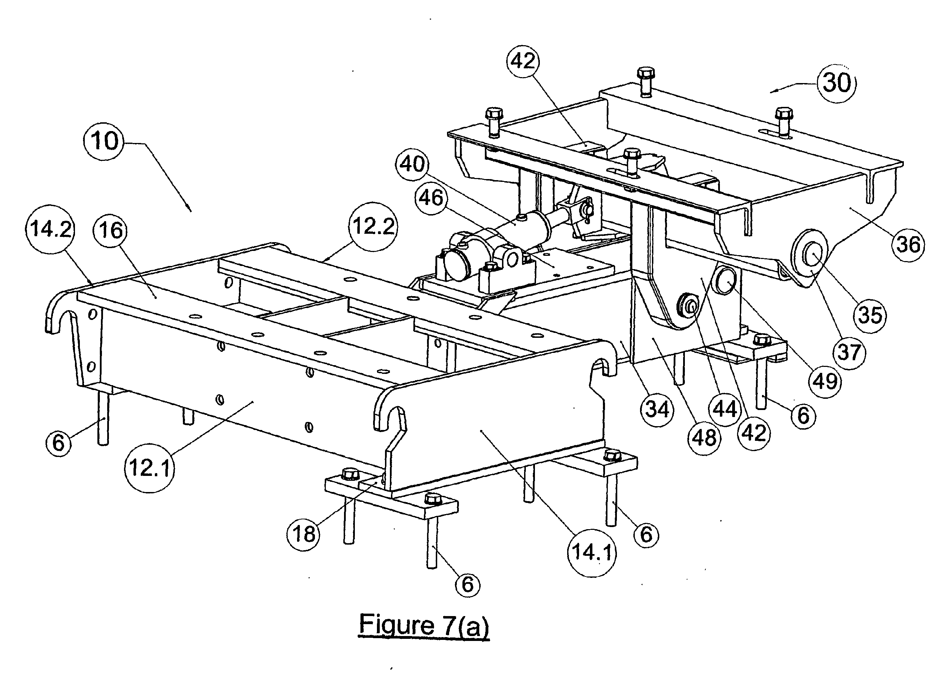

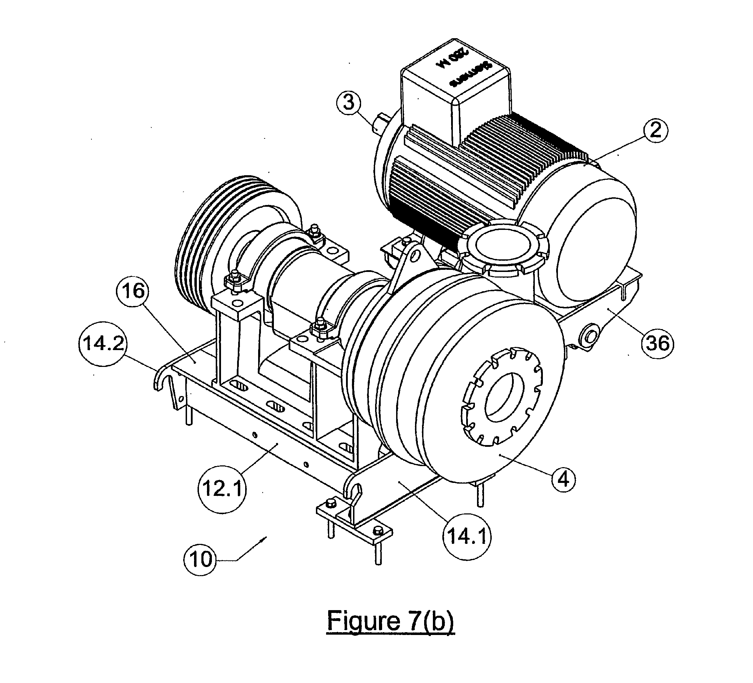

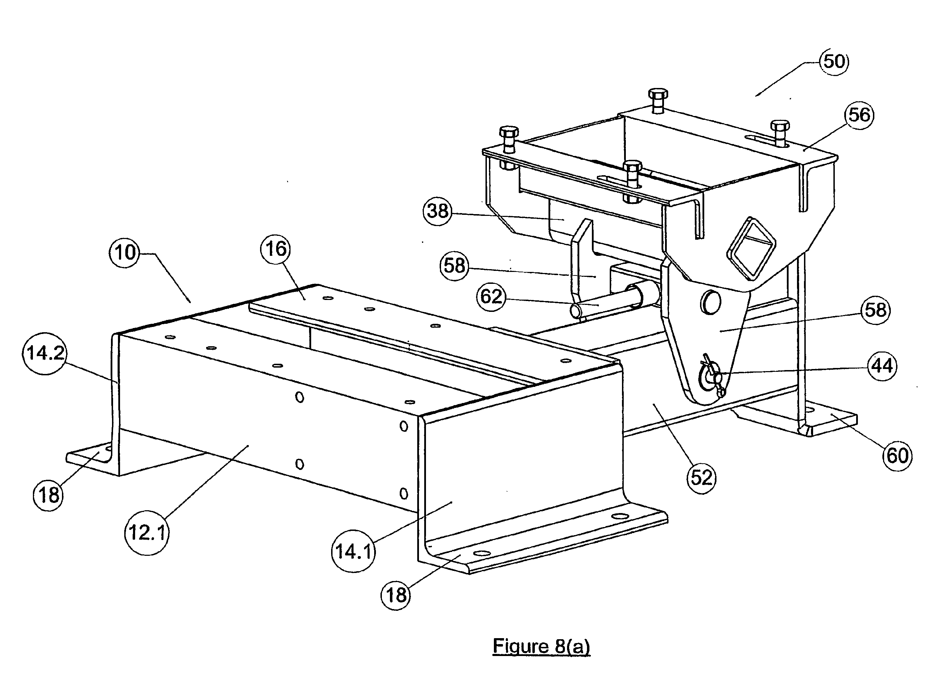

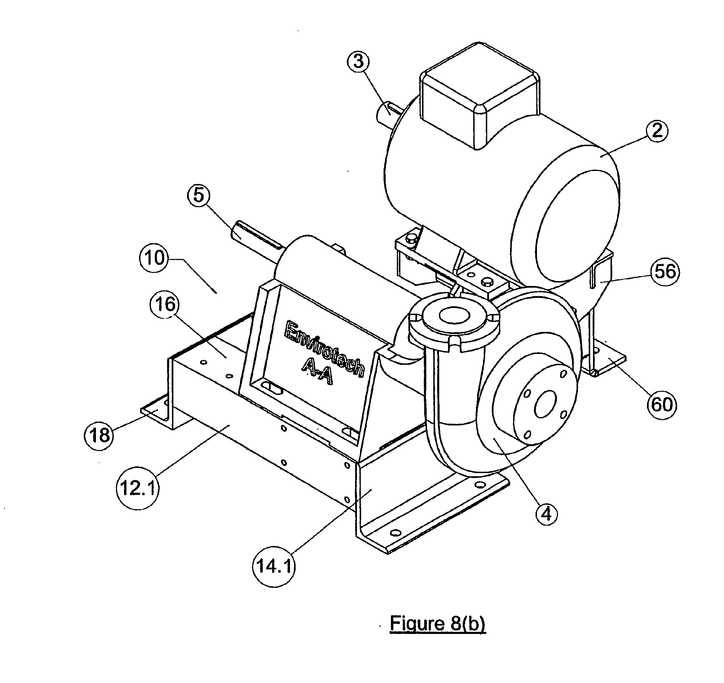

In erecting the standard alongside configuration, as illustrated in Figures 7(a) and 8(a), end-mounting plate 32 (or 54) of alongside base 30 (or 50) is connected to either side plates 12.1, 12.2 of the driven means support base 10. Both the driven means support base 10 and the alongside base 30 (or 50) are secured to the ground by means of bolts, pegs, pins or the like connecting means 6.

Similarly, when erecting the standard overhead configuration, as illustrated in Figures 11 (a) and 12(a), side-mounting plate 72 of overhead base 70 (or 84) is connected to either side plates 12.1, 12.2 of the driven means support base 10.

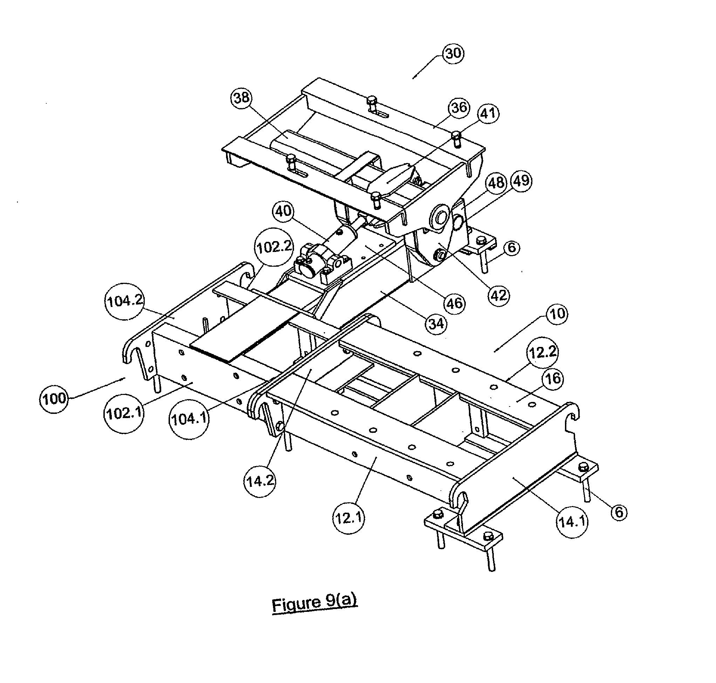

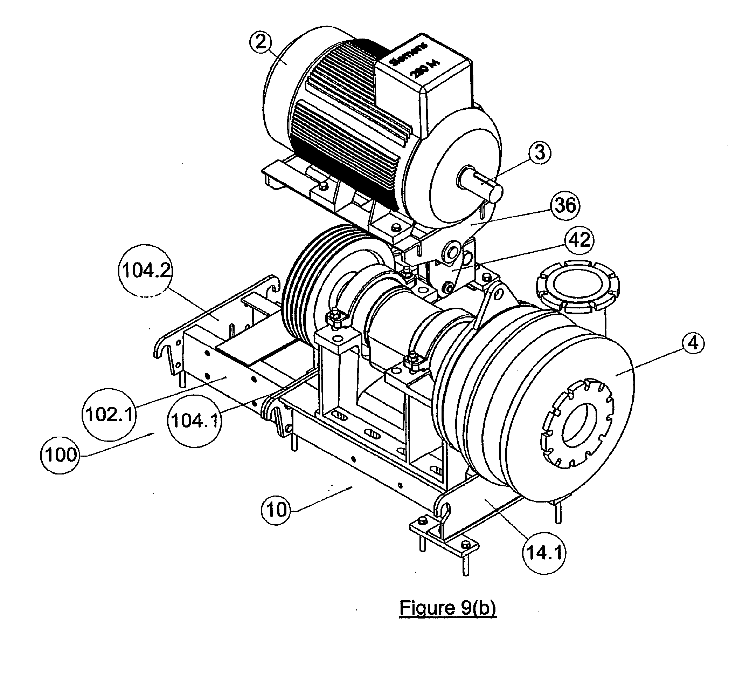

In erecting the Z-alongside configuration as illustrated in Figure 9(a), the end-mounting plate 32 of the alongside base 30 is connected to the side plate 102.2 of the Z-adapter base 100. In turn, the end plate 14.2 of the driven means support base 10 is connected to the end plate 104.1 of the Z-adapter base 100 such that bracket 20 of the driven means support base 10 protrudes through bracket aperture 110 of the Z-adapter base 100. It should be appreciated that the alongside base 30 is connectable to either side plate 102.1 or 102.2 of the Z-adapter base 100 in this configuration.

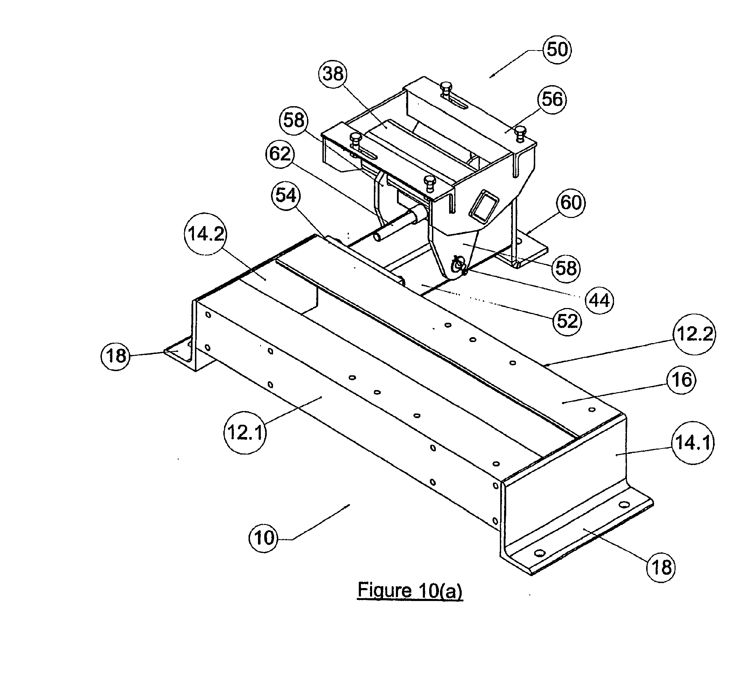

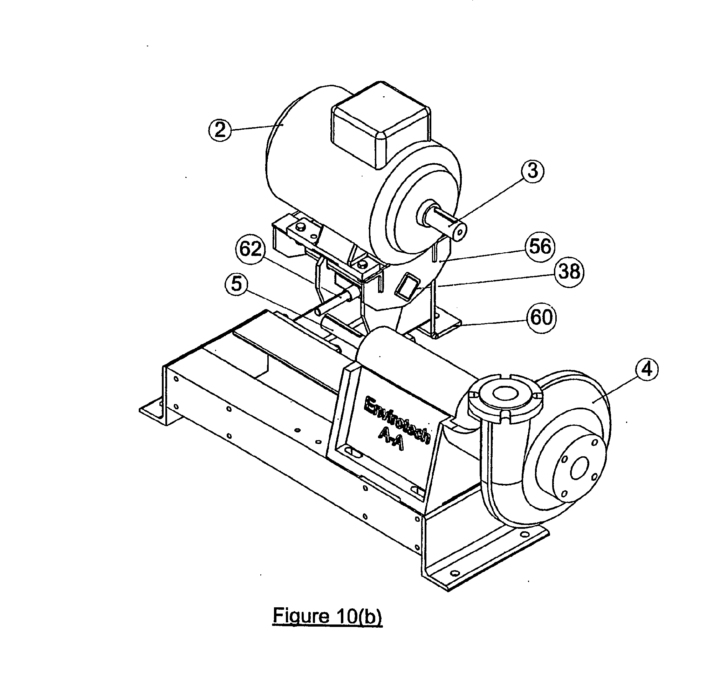

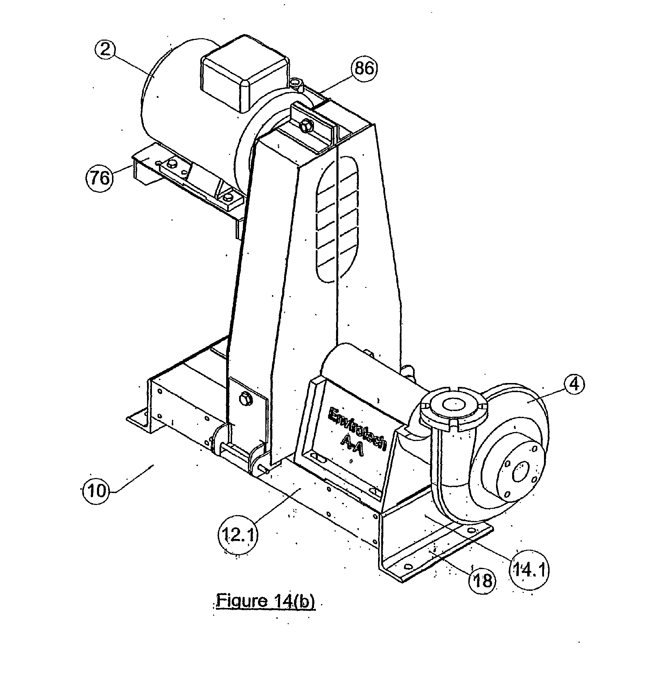

In the Z-alongside configuration illustrated in Figure 10(a), which is suitable for drive means frame sizes of 132mm or less, the driven means support base 10 has been extended to effectively "incorporate" the Z-adapter base so that the drive means 2 and driven means 4 are mountable in a Z-configuration without the need for a separate Z-adapter base. A similar principle applies in the Z-overhead configuration illustrated in Figure 14(a).

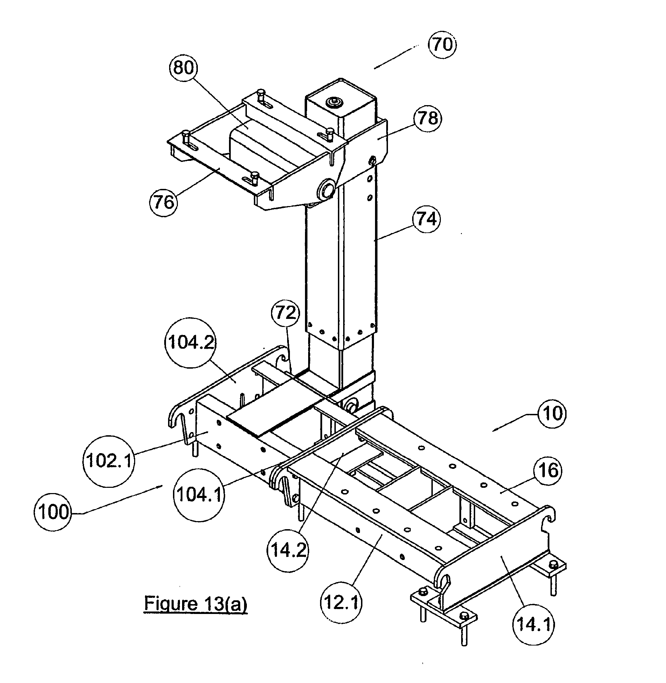

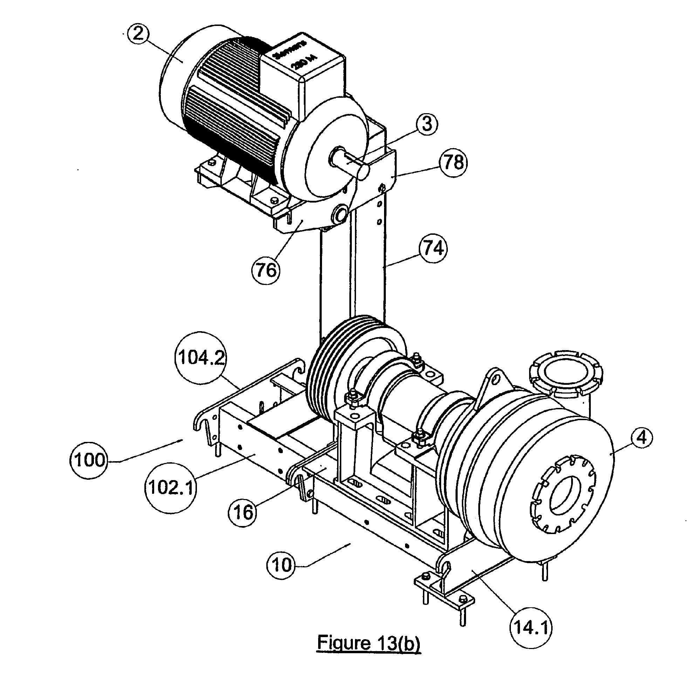

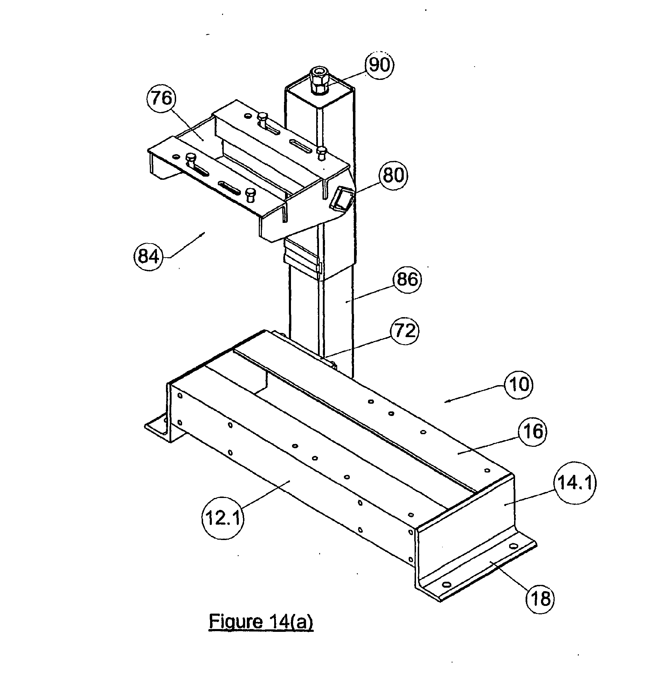

In erecting the Z-overhead configuration illustrated in Figure 13(a), the side-mounting plate 72 of the overhead base 70 is connected to the side plate 102.2 of the Z-adapter base 100. It will again be appreciated that the overhead base 70 is connectable to either side plate 102.1 or 102.2 of the Z-adapter base 100 in this configuration. The end plate 14.2 of the driven means support base 10 is again connected to the end plate 104.1 of the Z-adapter base 100 such that bracket 20 of the driven means support base 10 protrudes through bracket aperture 110 of the Z-adapter base 100.

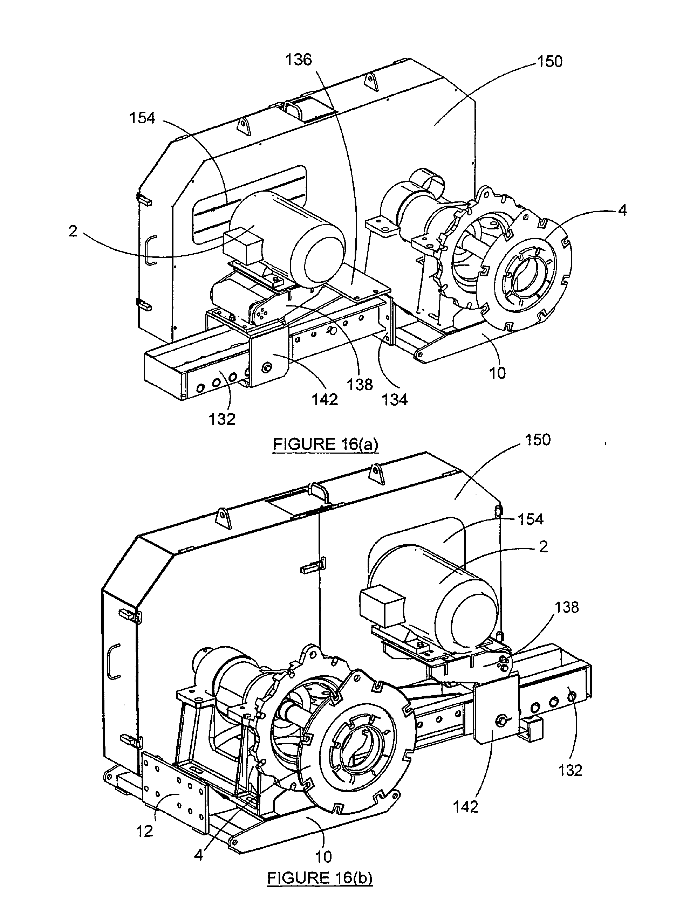

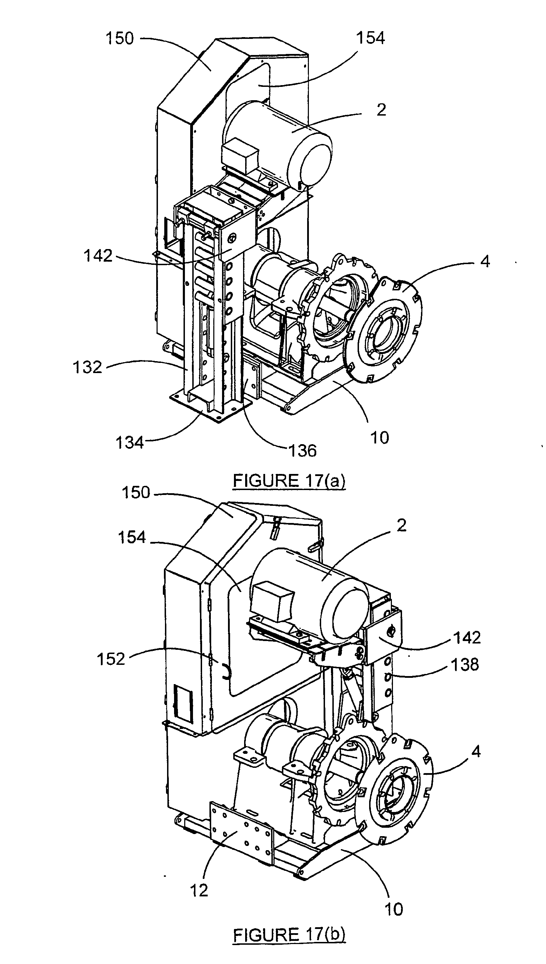

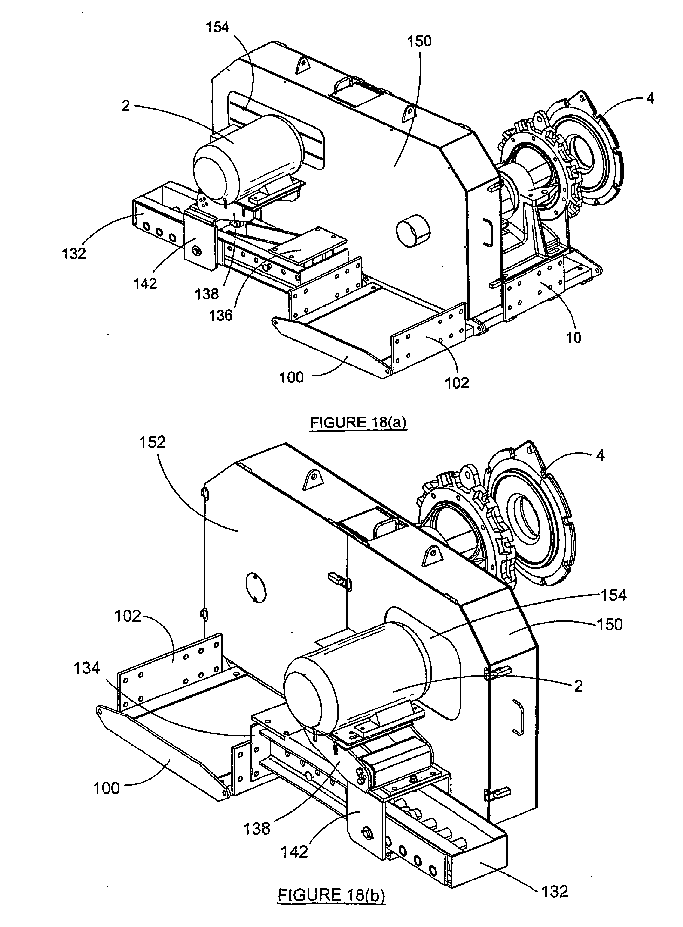

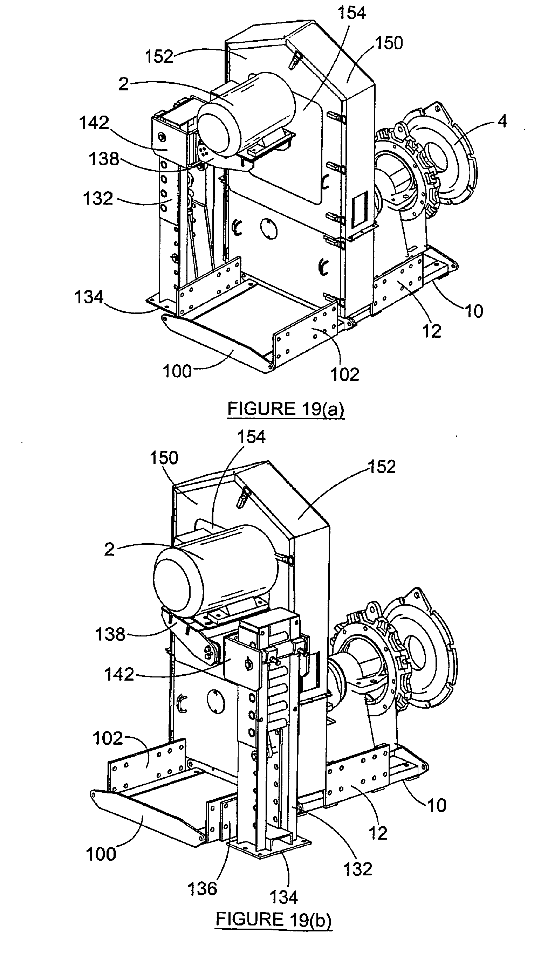

Reference is now made to Figures 15 to 19, which illustrate a drive means support base, designated 130, and which is adapted to be either an overhead base or an alongside base, thus effectively alleviating the need for two separate bases as described hereinbefore. The drive means support base 130 includes a drive beam 132 to which two mounting plates are connected, namely an end-mounting plate 134, which is connected to one end of the drive beam 132; and a side-mounting plate 136, connected to a side of the drive beam 132. The mounting plates 134 and 136 are dimensioned releasably to engage either of the side plates 12 of the driven means support base 10 illustrated in Figure 1 (c) for the standard configurations [see Figures 16 and 17]; or the side plates 102 of the Z-adapter base 100 of Figure 6(c) when used in the Z-configurations [see Figures 18 and 19].

The drive means support base 130 also includes a drive means receiving platform 138, which is connected to the drive beam 132 for receiving the drive means 2 thereon. The drive means receiving platform 138 is connected to the drive beam 132 by means of bracket 142 and is pivotally displaceable relative to the drive beam 132 in pivot point 140. It is also linearly displaceable on the drive beam 132 in that the bracket 142 can be connected to the drive beam 132 at various positions along its length.

As said hereinbefore, the drive means support base 130 can be mounted relative to the driven means support base 10 either in an overhead configuration, in which the drive beam 132 is orientated vertically upright in a plane substantially perpendicular to the plane of the base platform 16 [as illustrated in Figures 17 and 19]; or in an alongside configuration, in which the drive beam 132 is orientated in substantially the same plane as the base platform 16 [Figures 16 and 18].

The drive means support base 130 includes pre-stressing means 144 in the form of a hydraulically operable arm for pivoting the drive means receiving platform 138 relative to the drive beam 132. The hydraulically operable arm 144 is pivotally connected at one end thereof to the drive beam 132 and pivotally connected at an opposite end thereof to the drive means receiving platform 138. The hydraulically operable arm 40, which can be activated either automatically or manually, is adapted to move the drive means receiving platform 138 while at the same time moving the tensioning means 38 towards its tensioned position.

Figures 16 to 19 also illustrate a belt guard 150 for use with the mounting system according to the invention. The belt guard 150 covers the belt extending between the drive and driven means 2 and 4 to prevent injury to users or bystanders, especially in the unlikely event that the belt may dislodge itself from the drive and/or driven means while running. The belt guard 150 includes two opposed parallel sidewalls 152 spaced from each other to define a belt path between them suitable for housing the belt (not seen in the drawings). The belt guard 150 provides access to the belt in use through doors 154. The belt guard 150 is releasably connected to either one or both of the drive and driven means support bases.

The invention concerns a modular mounting system adapted for accommodating substantially any motor size in a range wherein the relative positioning between the shaft shoulders of the drive and driven means is such that the shaft shoulders are always orientated in alignment and parallel to each other irrespective of the configuration of the modules of the system. In addition, the system provides a series of interchangeable drive and driven means support bases, as well as an open structure design for permitting easy access to both the drive means and driven means in use.

It will be appreciated that many other embodiments and configurations of the invention are possible without departing from the spirit or scope of the invention as defined in the claims.

## Claims

1. A mounting system suitable for mounting drive and driven means [2, 4] of a mechanical power transmission system relative to each other, the mounting system comprising a set of modules including a driven means support base [10] having at least one base platform [16] for supporting the driven means [4] thereon and a drive means support base [30, 50, 70, 84, 130] having a drive beam [34, 52, 74, 88, 132] and a drive means receiving platform [36, 56, 76, 138] on which the drive means [2] is mounted, the drive means receiving platform being mechanically linked to the drive beam [34, 52, 74, 86, 132]; **characterised in that** the drive means receiving platform is pivotally displaceable relative to the drive beam [34, 52, 74, 86, 132] and/or linearly displaceable parallel to the longitudinal axis of the drive beam [34, 52, 74, 86, 132] such that the drive means receiving platform [36, 56, 76, 138] is displaceable relative to the base platform [16]; the drive means support base [30, 50, 70, 84, 130] being disconnectably and interchangeably connectable to the driven means support base [10] and being connectable in a first overhead configuration, in which the drive beam [74, 86, 132] is orientated vertically upright in a plane substantially perpendicular to the plane of the base platform [16] such that the drive and driven means [2, 4] are vertically spaced, and being re-connectable to each other in a second alongside configuration, in which the drive beam [34, 52, 132] is orientated in substantially the same plane as the base platform [16] such that the drive and driven means [2, 4] are horizontally spaced, the arrangement being such that a drive shaft [3] and a driven shaft [5] of the drive and driven means [2, 4] are aligned and orientated parallel to each other in use, and particularly such that shaft shoulders of the drive and driven shafts [3, 5] are aligned in anyone of the mounting configurations so as to ensure a straight belt path between the two shafts at all times.

2. The mounting system as claimed in claim 1 **characterised** therein that the driven means support base [10] includes engagement means for permitting releasable engagement with the drive means support base [30, 50, 70, 84, 130].

3. The mounting system as claimed in claim 1 **characterised** therein that the driven means support base [10] also includes two opposed side plates [12.1, 12.2] and two opposed end plates [14.1, 14.2] connected to and extending from the base platform [16].

4. The mounting system as claimed in claims 1 and 3 **characterised** therein that the drive means support base [30, 50, 70, 84, 130] is disconnectably connected either to the ground or a like rigid surface approximate the driven means support base [10], or to the driven means support base [10] itself and particularly to anyone of the opposed side plates [12.1, 12.2] or end plates [14.1,14.2] of the driven means support base [10].

5. The mounting system as claimed in claims 1 and 3 **characterised** therein that the drive means support base [30, 50, 70, 84, 130] includes at least one mounting plate [32, 54,72, 134,136] connected to the drive beam [34, 52, 74, 86, 132] and dimensioned releasably to engage either of the side plates [12.1, 12.2] or end plates [14.1,14.2] of the driven means support base [10].

6. The mounting system as claimed in claim 5 **characterised** therein that the drive means support base [30, 50, 70, 84, 130] includes at least one end-mounting plate [32, 134] connected to an end of the drive beam [34, 52, 74, 86, 132] and at least one side-mounting plate [72, 136] connected to a side of the drive beam [34, 52, 74, 86, 132].

7. The mounting system as claimed in claim 1 characterise therein that the drive beam [74, 86] comprises of a telescopic shaft [74.1, 86.1] and sleeve [74.2, 86.2] arrangement

8. The mounting system as claimed in claims 1 and 7 **characterised** therein that the drive means receiving platform [76] is mechanically associated with the telescopic shaft [74.1, 86.1] and sleeve [74.2, 88.2] arrangement, the arrangement being such that the drive means receiving platform [76] is movable along the longitudinal axis of the drive beam [74, 86] and linearly relative to the base platform [16] through telescoping the drive beam [74, 86].

9. The mounting system as claimed in claim 7 **characterised** therein that telescoping of the shaft [74.1, 86.1] and sleeve [74.2, 86.2] arrangement is achieved by means of a threaded rod [88] or the like mechanical adjustment means located in the drive beam [74, 86]; or by means of a hydraulic cylinder arranged within the drive, beam [74, 86] for telescoping the same.

10. The mounting system as claimed in claim 1 **characterised** therein that the same drive means support base [130] is mountable relative to the driven means support base [10] in either one of the overhead or alongside configurations.

11. The mounting system as claimed in claim 1 **characterised** therein that the drive means support base [30, 50, 70, 84, 130] is selected from one of two designs namely an overhead drive means support base [70, 84, 130] ("overhead base") or an alongside drive means support base [30, 50, 13d] ("alongside base").

12. The mounting system as claimed in claim 1 **characterised** therein that the drive means support base [30, 50, 70, 84, 130] includes tensioning means [38, 80] which is movable between a tensioned and a substantially non-tensioned position such that in the tensioned position it is biased to the non-tensioned position for moving the drive means support base [30, 50, 70, 84, 130], the arrangement being such that when the tensioning means [38, 80]. is in the tensloned position, a belt is optimally tensioned between the drive and driven means [2, 4], arid when the tensioning means [38, 80] is in the substantially non-tensioned position, the belt is non-optimally tensioned.

13. The mounting system as claimed in claim 12 **characterised** therein that the tensioning means [38, 80] is resilient biasing means such as a spring, torsion element or a Neidhart unit

14. The mounting system as claimed in claim 1 **characterised** therein that it includes prestressing means [40, 62, 144], which is adapted for effecting displacement of the drive means receiving platform [36, 56, 76, 138] relative to the base platform [16] for manipulating distance between the drive and driven means [2, 4] mounted on these respective platforms, thereby manipulating belt tension of a belt extending between the drive and driven means [2, 4] in use, the pre-stressing means [40, 62, 144] further being adapted to move the drive means receiving platform [36, 56, 76, 138] while at the same time moving the tensioning means [38, 80] towards its tensioned position.

15. The mounting system as claimed in claim 14 **characterised** therein that the pre-stressing means [40, 144] is a hydraulically operable arm [40, 144] pivotally connected at one end thereof to the drive beam [34, 132] and pivotally connected at an opposite end thereof to the drive means receiving platform [36, 138], the arrangement being such that extention and retraction of the hydraulic arm [40, 144] effects pivoting of the drive means receiving platform [36, 138] about the drive beam [34, 132].

16. The mounting system as claimed in claim 14 **characterised** therein that the pre-stressing means [40, 62, 144] is self-adjusting and adapted for continuously moving at least the drive means receiving platform [36, 56, 76, 138] substantially, immediately upon occurrence of belt slacking while the belt is running.

17. The mounting system as claimed in claim 1 **characterised** therein that the drive means receiving platform [36, 56, 76, 138] is manually adjustable relative to the driven means support base [10] while the belt is running.

18. The mounting system as claimed in claim 1 **characterised** therein that it further includes a Z-adapter base [100] which is removably locatable intermediate the drive means support base [30, 50, 70, 84, 130] and the driven means support base [10] such that the drive means support base [30, 50, 70, 84, 130] and the driven means support base [10] are arranged relative to each other in a substantially Z-configuration.

19. The mounting system as claimed in claim 18 **characterised** therein that the Z-adapter base [100] is locatable between the drive and driven means support bases either in a Z-overhead configuration, in which the drive beam [74, 86, 132] is orientated vertically upright in a plane substantially perpendicular to the plane of the base platform [16] or in a Z-alongside configuration, in which the drive beam [34, 52, 132] is orientated in substantially the same plane as the base platform [16].

20. The mounting system as claimed in claim 19 **characterised** therein that in the Z-overhead configuration the side-mounting plate [72, 134, 136] of the drive means support base [70; 84, 130] is connected to the Z-adapter base [100], which in turn is connected to the driven means support base [10] in such a way that the drive means [2] and driven means [4] are substantially vertically spaced from each other in a Z-configuration, whereas in the Z-alongside configuration the end-mounting plate [32, 54, 134] of the drive means support base [30; 50, 130] is connected to the Z-adapter base [100], which in turn is connected to the driven means support base [10] such that the drive and driven means [2, 4] are substantially horizontally spaced from each other in a Z-configuration.

21. The mounting system as claimed in claim 18 **characterised** therein that the Z-adapter base [100] includes a base plate [103] orientated in substantially the same plane as the base platform [16]; two opposed side plates [102]; and two opposed end-plates [104] connected to the base plate [103]; and engagement means suitable for engaging the drive and driven means [2.4] support bases.

22. The mounting system as claimed in claim 21 **characterised** therein that the drive and driven means support bases are disconnectably connected to the Z-adapter base [100] such that the drive means support base [30, 50, 70, 84, 130] is connected to either one of the side or end plates of the Z-adapter base [100], while the driven means support base [10] is connected to either one of the other of the end or side plates of the Z-adapter base [100], as the case be.

23. The mounitng system as claimed in claim 1 **characterised** therein that it also includes at least one belt guard [150] adapted at least partially to cover a belt extending between the drive and driven means [2, 4] and including at least two opposed parallel sidewalls [152] spaced from each other to define a belt path between them suitable for housing the belt, and further being **characterised** therein that it provides access to the belt in use.

24. A drive means support base [30, 50, 70, 84, 130] suitable for cooperating with a driven means support base [10] in a modular mounting system, the drive means support base [30, 50, 70, 84, 130] comprising a drive beam [34, 52, 74, 88, 132]; mounting means [32, 54,72, 134, 136] connected to the drive beam [34, 52, 74, 86, 132] for mouting the drive means support base [30, 50, 70, 84, 130] either to the ground or the like rigid surface, or to the driven means support base [10]; and a drive means receiving platform [36, 56, 76, 138] mechanically linked to the drive beam [34, 52, 74, 86, 132] and suitably dimensioned for receiving the drive means [2] thereon.

25. The drive means support base [30, 50, 70, 84, 130] as claimed in claim 24 **characterised**, therein that it includes tensioning means [38, 80] connected to the drive means receiving platform [36, 56, 76, 138] and movable between a tensioned and a substantially non-tensioned position such that in the tensioned position it is blased to the non-tensioned position for moving the drive means receiving platform [36, 56, 76,138].

26. The drive means support base [30, 50, 70, 84, 130] as claimed in claims 24 and 25 **characterised** therein that it also includes pre-stressing means [40, 62, 144], which is adapted for effecting displacement of the drive means receiving platform [36, 56, 76, 138] relative to the driven means support base [10] for manipulating distance between drive and driven means [2, 4] respectively mounted on the drive means receiving platform [36, 56, 78, 138] and the driven means support base [10], thereby, manipulating belt tension of a belt extending between the drive and driven means [2, 4] in use, the pre-stressing means [40, 62, 144] further being adapted to move the drive means receiving platform [36, 56, 76, 138] while at the same time moving the tensioning means [38, 80] towards its tensioned position.

27. A Z-adapter base [100] suitable for use in a modular mounting system including a drive means support, base [30, 50, 70; 84,130] for supporting a drive, means [2] thereon, and a driven means support base [10] for supporting driven means [4], the Z-adapted base [100] being locatable intermediate the drive and driven means support bases such that the drive and driven means support bases are arranged relative to each other in a substantially Z-configuration.

28. The Z-adapter base [100] as claimed in claim 27 **characterised** therein that the Z-adapte base [100] includes a base plate [103]; two opposed side plates [102] and two opposed end plates [104] connected to the base plate [103]; and engagement means suitables for engaging the drive and driven means support bases.

29. The Z-adapter base [100] as claimed in claims 27 and 28 **characterised** therein that the drive and driven means support bases are disconnectably connected to the Z-adapter base [100] such that the drive means support base [30, 50, 70, 84, 130] is connected to either one of the side or end plates of the Z-adapter base [100], while the driven means support base [10] is connected to either one of the other of the end or side plates of the Z-adapter base [100], as the case be.

## Patentansprüche

1. Haltesystem, das zum Halten eines Antriebsmittels und eines angetriebenen Mittels [2, 4] eines mechanischen Leistungsübertragungssystems bezogen zueinander geeignet ist, wobei das Haltesystem einen Satz von Modulen umfasst, einschließlich einer Trägerbasis für das angetriebene Mittel [10] mit mindestens einer Basisplattform [16] zum Tragen des angetriebenen Mittels [4] und einer Trägerbasis für das Antriebsmittel [30, 50, 70, 84, 130] mit einem Antriebsbalken [34, 52, 74, 88, 132] und einer Aufnahmeplattform für ein Antriebsmittel [36, 56, 76, 138], auf der das Antriebsmittel [2] gehalten wird, wobei die Aufnahmeplattform für das Antriebsmittel mit dem Antriebsbalken [34, 52, 74, 86, 132] mechanisch verbunden ist; **dadurch gekennzeichnet, dass** die Aufnahmeplattform für das Antriebsmittel bezogen auf den Antriebsbalken [34, 52, 74, 86, 132] schwenkbar verschiebbar und/oder parallel zu der Längsachse des Antriebsbalkens [34, 52, 74, 86, 132] linear verschiebbar ist, so dass die Aufnahmeplattform für das Antriebsmittel [36, 56, 76, 138] bezogen auf die Basisplattform [16] verschiebbar ist; wobei die Trägerbasis für das Antriebsmittel [30, 50, 70, 84, 130] trennbar und austauschbar mit der Trägerbasis für das angetriebene Mittel [10] verbindbar ist, und in einer ersten Überkopfkonfiguration verbindbar ist, bei der der Antriebsbalken [74, 86, 132] vertikal stehend in einer Ebene im Wesentlichen senkrecht zu der Ebene der Basisplattform [16] ausgerichtet ist, so dass das Antriebsmittel und das angetriebene Mittel [2, 4] vertikal beabstandet sind und miteinander in einer zweiten längsseitigen Konfiguration wiederverbindbar sind, bei der der Antriebsbalken [34, 52, 132] in der im Wesentlichen gleichen Ebene wie die Basisplattform [16] ausgerichtet ist, so dass das Antriebsmittel und das angetriebene Mittel [2, 4] horizontal beabstandet sind, wobei die Anordnung derart ist, dass eine Antriebswelle [3] und eine angetriebene Welle [5] des Antriebsmittels und angetriebenen Mittels [2, 4] ausgerichtet und parallel zueinander im Gebrauch orientiert sind, und insbesondere derart, dass die Wellenschultern der Antriebswelle und angetriebenen Wellen [3, 5] in irgendeiner der Haltekonfigurationen ausgerichtet sind, um einen geraden Riemenpfad zwischen den beiden Wellen zu jeder Zeit sicherzustellen.

2. Haltesystem gemäß Anspruch 1, **gekennzeichnet dadurch, dass** die Trägerbasis für das angetriebene Mittel [10] Ineingriffnahmemittel zur lösbaren Ineingriffnahme mit der Trägerbasis für das Antriebsmittel [30, 50, 70, 84, 130] umfasst.

3. Haltesystem gemäß Anspruch 1, **gekennzeichnet dadurch, dass** die Trägerbasis für das angetriebene Mittel [10] auch zwei gegenüberliegende Seitenplatten [12.1, 12.2] und zwei gegenüberliegende Endplatten [14.1, 14.2] umfasst, die mit der Basisplattform [16] verbunden sind und sich von dieser erstrecken.

4. Haltesystem gemäß Anspruch 1 und 3, **gekennzeichnet dadurch, dass** die Trägerbasis für das Antriebsmittel [30, 50, 70, 84, 130] entweder mit dem Boden oder einer ähnlichen festen Oberfläche, die nahe der Trägerbasis für das angetriebene Mittel [10] ist, oder mit der Trägerbasis für das angetriebene Mittel [10] selbst, und insbesondere mit irgendeiner der gegenüberliegenden Seitenplatten [12.1, 12.2] oder Endplatten [14.1, 14.2] der Trägerbasis für das angetriebene Mittel [10] trennbar verbunden ist.

5. Haltesystem gemäß Anspruch 1 und 3, **gekennzeichnet dadurch, dass** die Trägerbasis für das Antriebsmittel [30, 50, 70, 84, 130] mindestens eine Halteplatte [32, 54, 72, 134, 136] umfasst, die mit dem Antriebsbalken [34, 52, 74, 86, 132] verbunden und lösbar dimensioniert ist, um entweder in die Seitenplatten [12.1, 12.2] oder die Endplatten [14.1, 14.2] der Trägerbasis für das angetriebene Mittel einzugreifen.

6. Haltesystem gemäß Anspruch 5, **gekennzeichnet dadurch, dass** die Trägerbasis für das Antriebsmittel [30, 50, 70, 84, 130] mindestens eine Endhalteplatte [32, 134] aufweist, die mit einem Ende des Antriebsbalkens [34, 52, 74, 86, 132] verbunden ist, und mindestens eine Seitenhalteplatte [72, 136], die mit einer Seite des Antriebsbalkens [34, 52, 74, 86, 132] verbunden ist.

7. Haltesystem gemäß Anspruch 1, **gekennzeichnet dadurch, dass** der Antriebsbalken [74, 86] eine Anordnung aus einem Teleskopschaft [74.1, 86.1] und Buchse [74.2, 86.2] umfasst.

8. Haltesystem gemäß Anspruch 1 und 7, **gekennzeichnet dadurch, dass** die Aufnahmeplattform für das Antriebsmittel [76] mit der Anordnung aus Teleskopschaft [74.1, 86.1] und Buchse [74.2, 86.2] mechanisch verbunden ist, wobei die Anordnung derart ist, dass die Aufnahmeplattform für das Antriebsmittel [76] entlang der Längsachse des Antriebsbalkens [74, 86] und bezogen auf die Basisplattform [16] durch ineinander Schieben des Antriebsbalkens [74, 86] linear bewegbar ist.

9. Haltesystem gemäß Anspruch 7, **gekennzeichnet dadurch, dass** das ineinander Schieben der Anordnung aus Schaft [74.1, 86.1] und Buchse [74.2, 86.2] mittels eines Gewindestabs [88] oder einem ähnlichem mechanischen Einstellmittel erreicht wird, das in dem Antriebsbalken [74, 86] angeordnet ist; oder mittels eines hydraulischen Zylinders, der in dem Antriebsbalken [74, 86] zum Teleskopieren desselben angeordnet ist.

10. Haltesystem gemäß Anspruch 1, **gekennzeichnet dadurch, dass** die gleiche Trägerbasis für das Antriebsmittel [130] bezogen auf die Trägerbasis für das angetriebene Mittel [10] in entweder der Überkopf- oder längsseitigen Konfiguration montierbar ist.

11. Haltesystem gemäß Anspruch 1, **gekennzeichnet dadurch, dass** die Trägerbasis für das Antriebsmittel [30, 50, 70, 84, 130] aus einer der beiden Ausgestaltungen, nämlich einer Überkopfträgerbasis für das Antriebsmittel [70, 84, 130] ("Überkopfbasis") oder einer längsseitigen Trägerbasis für das Antriebsmittel [30, 50, 130] ("längsseitigen Basis"), ausgewählt wird.

12. Haltesystem gemäß Anspruch 1, **gekennzeichnet dadurch, dass** die Trägerbasis für das Antriebsmittel [30, 50, 70, 84, 130] ein Spannmittel [38, 80] aufweist, das zwischen einer gespannten und einer im Wesentlichen nicht gespannten Position bewegbar ist, so dass es in der gespannten Position zu der nicht gespannten Position zum Bewegen der Trägerbasis für das Antriebsmittel [30, 50, 70, 84, 130] vorgespannt ist, wobei die Anordnung derart ist, dass, wenn das Spannmittel [38, 80] in der gespannten Position ist, ein Riemen zwischen dem Antriebsmittel und dem angetriebenen Mittel [2, 4] optimal gespannt ist, und wenn das Spannmittel [38, 80] in der im Wesentlichen nicht gespannten Position ist, der Riemen nicht optimal gespannt ist.

13. Haltesystem gemäß Anspruch 12, **kennzeichnet dadurch, dass** das Spannmittel [38, 80] ein nachgiebiges Vorspannmittel, wie beispielsweise eine Feder, ein Torsionselement oder eine Neidhart-Einheit, ist.

14. Haltesystem gemäß Anspruch 1, **gekennzeichnet dadurch, dass** es ein Vorspannmittel [40, 62, 144] zur Verschiebung der Aufnahmeplattform für das Antriebsmittel [36, 56, 76, 138] bezogen auf die Basisplattform [16] zum Manipulieren des Abstands zwischen dem Antriebsmittel und dem angetriebenen Mittel [2, 4] aufweist, die auf diesen jeweiligen Plattformen angebracht sind, wodurch die Riemenspannung eines sich zwischen dem Antriebsmittel und dem angetriebenen Mittel [2, 4] erstreckenden Riemens im Gebrauch manipuliert wird, wobei das Vorspannmittel [40, 62, 144] ferner angepasst ist, um die Aufnahmeplattform für das Antriebsmittel [36, 56, 76, 138] zu bewegen, während zur gleichen Zeit das Spannmittel [38, 80] zu seiner gespannten Position hin bewegt wird.

15. Haltesystem gemäß Anspruch 14, **gekennzeichnet dadurch, dass** das Vorspannmittel [40, 144] ein hydraulisch betätigbarer Arm [40, 144] ist, der schwenkbar an einem Ende davon mit dem Antriebsbalken [34, 132] und schwenkbar an einem entgegengesetzten Ende davon mit der Aufnahmeplattform für das Antriebsmittel [36, 138] verbunden ist, wobei die Anordnung derart ist, dass das Ausfahren und Einfahren des hydraulischen Arms [40, 144] das Schwenken der Aufnahmeplattform für das Antriebsmittel [36, 138] um den Antriebsbalken [34, 132] bewirkt.

16. Haltesystem gemäß Anspruch 14, **gekennzeichnet dadurch, dass** das Vorspannmittel [40, 62, 144] selbsteinstellend und angepasst ist, um zumindest die Aufnahmeplattform für das Antriebsmittel [36, 56, 76 138] bei Auftreten von Riemendurchhang im Wesentlichen sofort zu bewegen, während der Riemen läuft.

17. Haltesystem gemäß Anspruch 1, **gekennzeichnet dadurch, dass** die Aufnahmeplattform für das Antriebsmittel [36, 56, 76, 138] bezogen auf die Trägerbasis für das angetriebene Mittel [10] manuell einstellbar ist, während der Riemen läuft.

18. Haltesystem gemäß Anspruch 1, **gekennzeichnet dadurch, dass** es ferner eine Z-Adapterbasis [100] aufweist, die abnehmbar zwischen der Trägerbasis für das Antriebsmittel [30, 50, 70, 84, 130] und der Trägerbasis für das angetriebenen Mittel [10] anordenbar ist, so dass die Trägerbasis für das Antriebsmittel [30, 50, 70, 84, 130] und die Trägerbasis für das angetriebene Mittel [10] bezogen zueinander in einer im Wesentlichen Z-Konfiguration angeordnet sind.

19. Haltesystem gemäß Anspruch 18, **gekennzeichnet dadurch, dass** die Z-Adapterbasis [100] zwischen den Trägerbasen für das Antriebsmittel und das angetriebene Mittel entweder in einer Z-Überkopfkonfiguration anordenbar ist, bei der der Antriebsbalken [74, 86, 132] vertikal stehend ausgerichtet ist in einer Ebene im Wesentlichen senkrecht zur Ebene der Basisplattform [16], oder in einer Z-längsseitigen Konfiguration, bei der der Antriebsbalken [34, 52, 132] in der im Wesentlichen gleichen Ebene wie die Basisplattform [16] ausgerichtet ist.

20. Haltesystem gemäß Anspruch 19, **gekennzeichnet dadurch, dass** bei der Z-Überkopfkonfiguration die Seitenhalteplatte [72, 134, 136] der Trägerbasis für das Antriebsmittel [70, 84, 130] mit der Z-Adapterbasis [100] verbunden ist, die ihrerseits mit der Trägerbasis für das angetriebene Mittel [10] auf eine derartige Art und Weise verbunden ist, dass das Antriebsmittel [2] und das angetriebene Mittel [4] im Wesentlichen vertikal voneinander in einer Z-Konfiguration beabstandet sind, wohingegen in der Z-längsseitigen Konfiguration die Endhalteplatte [32, 54, 134] der Trägerbasis für das Antriebsmittel [30, 50, 130] mit der Z-Adapterbasis [100] verbunden ist, die ihrerseits mit der Trägerbasis für das angetriebenen Mittel [10] verbunden ist, so dass das Antriebsmittel und das angetriebene Mittel [2, 4] im Wesentlichen horizontal voneinander in einer Z-Konfiguration beabstandet sind.

21. Haltesystem gemäß Anspruch 18, **gekennzeichnet dadurch, dass** die Z-Adapterbasis [100] aufweist: eine Basisplatte [103], die im Wesentlichen in der gleichen Ebene wie die Basisplattform [16] ausgerichtet ist; zwei gegenüberliegende Seitenplatten [102]; und zwei gegenüberliegende Endplatten [104], die mit der Basisplatte [103] verbunden sind; und Ineingriffnahmemittel, die zur Ineingriffnahme der Trägerbasen für das Antriebsmittel und das angetriebene Mittel [2, 4] geeignet sind.

22. Haltesystem gemäß Anspruch 21, **gekennzeichnet dadurch, dass** die Trägerbasen für das Antriebsmittel und das angetriebene Mittel mit der Z-Adapterbasis [100] trennbar verbunden sind, so dass die Trägerbasis für das Antriebsmittel [30, 50, 70, 84, 130] entweder mit den Seiten- oder Endplatten der Z-Adapterbasis [100] verbunden ist, während die Trägerbasis für das angetriebene Mittel [10] entweder mit den anderen der End- oder Seitenplatten der Z-Adapterbasis [100] verbunden ist.

23. Haltesystem gemäß Anspruch 1, **gekennzeichnet dadurch, dass** es ebenfalls mindestens einen Riemenschutz [150] umfasst, der angepasst ist, um mindestens teilweise einen Riemen abzudecken, der sich zwischen dem Antriebsmittel und dem angetriebenen Mittel [2, 4] erstreckt, und der mindestens zwei gegenüberliegende parallele Seitenwände [152] aufweist, die voneinander beabstandet sind, um einen Riemenpfad zwischen ihnen zu definieren, der zum Unterbringen des Riemens geeignet ist, und ferner **dadurch gekennzeichnet ist, dass** es einen Zugang auf den im Gebrauch befindlichen Riemen bereitstellt.

24. Trägerbasis für das Antriebsmittel [30, 50, 70, 84 130], das zum Zusammenarbeiten mit einer Trägerbasis für das angetriebene Mittel [10] in einem modularen Haltesystem geeignet ist, wobei die Trägerbasis für das Antriebsmittel [30, 50, 70, 84, 130] umfasst: einen Antriebsbalken [34, 52,74, 88, 132]; Haltemittel [32, 54, 72, 134, 136], die mit dem Antriebsbalken [34, 52, 74, 86, 132] zum Halten der Trägerbasis für das Antriebsmittel [30, 50, 70, 84, 130] entweder an dem Boden oder einer ähnlichen festen Oberfläche, oder mit der Trägerbasis für das angetriebene Mittel [10] verbunden sind; und eine Aufnahmeplattform für das Antriebsmittel [36, 56, 76, 138], die mechanisch mit dem Antriebsbalken [34, 52, 74, 86, 132] verbunden und entsprechend zur Aufnahme des Antriebsmittels [2] dimensioniert ist.

25. Trägerbasis für das Antriebsmittel [30, 50, 70, 84, 130] gemäß Anspruch 24, **gekennzeichnet dadurch, dass** es ein Spannmittel [38, 80] aufweist, das mit der Aufnahmeplattform für das Antriebsmittel [36, 56, 76, 138] verbunden und zwischen einer gespannten und einer im Wesentlichen nicht gespannten Position bewegbar ist, so dass es in der gespannten Position zur nicht gespannte Position vorgespannt ist, um die Aufnahmeplattform für das Antriebsmittel [36, 56, 76, 138] zu bewegen.

26. Trägerbasis für das Antriebsmittel [30, 50, 70, 84, 130] gemäß Anspruch 24 und 25, **gekennzeichnet dadurch, dass** sie ebenfalls ein Vorspannmittel [30, 62, 144] zur Verschiebung der Aufnahmeplattform für das Antriebsmittel [36, 56, 76, 138] bezogen auf die Trägerbasis für das angetriebene Mittel [10] zum Manipulieren des Abstands zwischen dem Antriebsmittel und angetriebenen Mittel [2, 4], die jeweils an der Aufnahmeplattform für das Antriebsmittel [36, 56, 76, 138] und der Trägerbasis für das angetriebene Mittel [10] angebracht sind, wodurch die Riemenspannung eines sich zwischen dem Antriebsmittel und dem angetriebenen Mittel [2, 4] erstreckenden Riemens im Gebrauch manipuliert wird, wobei das Vorspannmittel [40, 62, 144] ferner angepasst ist, um die Aufnahmeplattform für das Antriebsmittel [36, 56, 76, 138] zu bewegen, während zur gleichen Zeit das Spannmittel [38, 80] zu seiner gespannten Position bewegt wird.

27. Z-Adapterbasis [100], die zur Verwendung in einem modularen Haltesystem geeignet ist, mit einer Trägerbasis für das Antriebsmittel [30, 50, 70, 84, 130] zum Tragen eines Antriebsmittels [2] und einer Trägerbasis für das angetriebene Mittel [10] zum Tragen des angetriebenen Mittels [4], wobei die Z-Adapterbasis [100] zwischen den Trägerbasen für das Antriebsmittel und das angetriebene Mittel derart anordenbar sind, dass die Trägerbasen für das Antriebsmittel und das angetriebene Mittel relative zueinander in einer im Wesentlichen Z-Konfiguration angeordnet sind.

28. Z-Adapterbasis [100] gemäß Anspruch 27, **gekennzeichnet dadurch, dass** die Z-Adapterbasis [100] aufweist: eine Basisplatte [103]; zwei gegenüberliegende Seitenplatten [102] und zwei gegenüberliegende Endplatten [104], die mit der Basisplatte [103] verbunden sind; und Ineingriffnahmemittel, die zur Ineingriffnahme der Trägerbasen für das Antriebsmittel und das angetriebene Mittel geeignet sind.

29. Z-Adapterbasis [100] gemäß Anspruch 27 und 28, **gekennzeichnet dadurch, dass** die Trägerbasen für das Antriebsmittel und das angetriebene Mittel trennbar mit der Z-Adapterbasis [100] verbunden sind, so dass die Trägerbasis für das Antriebsmittel [30, 50, 70, 84, 130] entweder mit den Seiten- oder Endplatten der Z-Adapterbasis [100] verbunden ist, während die Trägerbasis für das angetriebene Mittel [10] mit den anderen der End- oder Seitenplatten des Z-Adapterbasis [100] verbunden ist.

## Revendications

1. Système de montage adapté pour le montage de moyens d'entraînement et de moyens entraînés (2, 4) d'un système de transmission de puissance mécanique les uns par rapport aux autres, le système de montage comportant un ensemble de modules incluant une base de support de moyens entraînés (10) ayant au moins une plate-forme de base (16) pour supporter les moyens entraînés (4) sur celle-ci, et une base de support de moyens d'entraînement (30, 50, 70, 84, 130) ayant une poutre d'entraînement (34, 52, 74, 88, 132) et une plate-forme de réception de moyens d'entraînement (36, 56, 76, 138) sur laquelle les moyens d'entraînement (2) sont montés, la plate-forme de réception de moyens d'entraînement étant liée mécaniquement à la poutre d'entrainement (34, 52, 74, 86, 132), **caractérisé en ce que** la plate-forme de réception de moyens d'entraînement peut être déplacée de manière pivotante par rapport à la poutre d'entraînement (34, 52, 74, 86, 132) et/ou peut être déplacée de manière linéaire parallèlement à l'axe longitudinal de la poutre d'entraînement (34, 52, 74, 86, 132), de telle sorte que la plate-forme de réception de moyens d'entraînement (36, 56, 76, 138) peut être déplacée par rapport à la plate-forme de base (16), la base de support de moyens d'entraînement (30, 50, 70, 84, 130) pouvant être connectée de manière déconnectable et interchangeable à la base de support de moyens entraînés (10) et pouvant être connectée dans une première configuration en hauteur, dans laquelle la poutre d'entraînement (74, 86, 132) est orientée droite verticalement dans un plan sensiblement perpendiculaire au plan de la plate-forme de base (16), de telle sorte que les moyens d'entraînement et les moyens entraînés (2, 4) sont espacés verticalement, et pouvant être reconnectées l'une à l'autre dans une seconde configuration latérale, dans laquelle la poutre d'entraînement (34, 52, 132) est orientée sensiblement dans le même plan que la plate-forme de base (16), de telle sorte que les moyens d'entraînement et les moyens entrainés (2, 4) sont espacés horizontalement, l'agencement étant de telle sorte qu'un arbre d'entraînement (3) et un arbre entraîné (5) des moyens d'entraînement et des moyens entraînés (2, 4) sont alignés et orientés parallèlement l'un à l'autre en utilisation, et en particulier de telle sorte que des épaulements d'arbre des arbres d'entraînement et entraîné (3, 5) sont alignés dans l'une quelconque des configurations de montage de manière à garantir un trajet de courroie droit entre les deux arbres tout le temps.

2. Système de montage selon la revendication 1, **caractérisé en ce que** la base de support de moyens entraînés (10) comporte des moyens de mise en prise pour permettre une mise en prise libérable avec la base de support de moyens d'entrainement (30, 50, 70, 84, 130).

3. Système de montage selon la revendication 1, **caractérisé en ce que** la base de support de moyens entraînés (10) comporte également deux plaques latérales opposées (12.1, 12.2), et deux plaques d'extrémité opposées (14.1, 14.2) connectées à la plate-forme de base (16), et s'étendant depuis celle-ci.

4. Système de montage selon les revendications 1 et 3, **caractérisé en ce que** la base de support de moyens d'entraînement (30, 50, 70, 84, 130) est connectée de manière pouvant être déconnectée au sol ou à une surface rigide analogue à proximité de la base de support de moyens entraînés (10), ou à la base de support de moyens entraînés (10) elle-même, et en particulier à l'une quelconque des plaques latérales (12.1, 12.2) ou plaques d'extrémité (14.1, 14.2) opposées de la base de support de moyens entraînés (10).

5. Système de montage selon les revendications 1 et 3, **caractérisé en ce que** la base de support des moyens d'entraînement (30, 50, 70, 84, 130) comporte au moins une plaque de montage (32, 54, 72, 134, 136) connectée à une poutre d'entrainement (34, 52, 74, 86, 132), et dimensionnée pour venir en prise de manière libérable avec les plaques latérales (12.1, 12.2) ou les plaques d'extrémité (14.1, 14.2) de la plaque de support de moyens entraînés (10).

6. Système de montage selon la revendication 5, **caractérisé en ce que** la base de support de moyens d'entraînement (30, 50, 70, 84, 130) comporte au moins une plaque de montage d'extrémité (32, 134) connectée à une extrémité de la poutre d'entraînement (34, 52, 74, 86, 132), et au moins une plaque de montage latérale (72, 136) connectée à un côté de la poutre d'entraînement (34, 52, 74, 86, 132).

7. Système de montage selon la revendication 1, **caractérisé en ce que** la poutre d'entraînement (74, 86) est constituée d'un agencement d'arbre télescopique (74.1, 86.1) et de manchon (74.2, 86.2).

8. Système de montage selon les revendications 1 et 7, **caractérisé en ce que** la plate-forme de réception de moyens d'entraînement (76) est associée mécaniquement à l'agencement d'arbre télescopique (74.1, 86.1) et de manchon (74.2, 86.2), l'agencement étant tel que la plate-forme de réception de moyens d'entrainement (76) est mobile le long de l'axe longitudinal de la poutre d'entraînement (74, 86) et de manière linéaire par rapport à la plate-forme de base (16) à travers un coulissement télescopique de la poutre d'entraînement (74, 86).

9. Système de montage selon la revendication 7, **caractérisé en ce que** le coulissement télescopique de l'agencement d'arbre (74.1, 86.1) et de manchon (74.2, 86.2) est obtenu par l'intermédiaire d'une tige filetée (88) ou de moyens d'ajustement mécaniques analogues situés dans la poutre d'entraînement (74, 86), ou par l'intermédiaire d'un vérin hydraulique agencé dans la poutre d'entraînement (74, 86) pour faire coulisser celle-ci de manière télescopique.

10. Système de montage selon la revendication 1, **caractérisé en ce que** la même base de support de moyens d'entraînement (130) peut être montée par rapport à la base de support de moyens entraînés (10) dans l'une ou l'autre parmi les configurations en hauteur ou à côté.

11. Système de montage selon la revendication 1, **caractérisé en ce que** la base de support de moyens d'entraînement (30, 50, 70, 84, 130) est sélectionnée parmi une de deux conceptions, c'est-à-dire une base de support de moyens d'entrainement en hauteur (70, 84, 130) ("base en hauteur") ou une base de support de moyens d'entraînement à côté (30, 50, 130) ("base à côté").

12. Système de montage selon la revendication 1, **caractérisé en ce que** la base de support de moyens d'entraînement (30, 50, 70, 84, 130) comporte des moyens de tension (38, 80) qui sont mobiles entre des positions tendue et sensiblement non-tendue, de telle sorte que dans la position tendue, ils sont rappelés vers la position non-tendue pour déplacement de la base de support de moyens d'entrainement (30, 50, 70, 84, 130), l'agencement étant tel que lorsque les moyens de tension (38, 80) sont dans la position tendue, une courroie est tendue de manière optimum entre les moyens d'entraînement et les moyens entraînés (2, 4), et lorsque les moyens de tension (38, 80) sont dans la position sensiblement non-tendue, la courroie n'est pas tendue de manière optimum.

13. Système de montage selon la revendication 12, **caractérisé en ce que** les moyens de tension (38, 80) sont des moyens de rappel élastiques comme un ressort, un élément de torsion ou une unité Neidhart.

14. Système de montage selon la revendication 1, **caractérisé en ce qu'**il comporte des moyens de précontrainte (40, 62, 144) qui sont adaptés pour effectuer un déplacement de la plate-forme de réception de moyens d'entraînement (36, 56, 76, 138) par rapport à la plate-forme de base (16) pour manipuler une distance entre les moyens d'entraînement et les moyens entraînés (2, 4) montés sur ces plates-formes respectives, en manipulant ainsi une tension de courroie d'une courroie s'étendant entre les moyens d'entraînement et les moyens entraînés (2, 4) en utilisation, les moyens de précontrainte (40, 62, 144) étant en outre adaptés pour déplacer la plate-forme de réception de moyens d'entraînement (36, 56, 76, 138) tout en déplaçant en même temps les moyens de tension (38, 80) vers leur position tendue.

15. Système de montage selon la revendication 14, **caractérisé en ce que** les moyens de précontrainte (40, 144) sont un bras pouvant être actionné de manière hydraulique (40, 144) connecté de manière pivotante à une première extrémité de celui-ci à la poutre d'entraînement (34, 132), et connecté de manière pivotante à une extrémité opposée de celui-ci à la plate-forme de réception de moyens d'entrainement (36, 138), l'agencement étant tel qu'une extension et une rétraction du bras hydraulique (40, 144) mettent en oeuvre un pivotement de la plate-forme de réception de moyens d'entraînement (36, 138) autour de la poutre d'entraînement (34, 132).

16. Système de montage selon la revendication 14, **caractérisé en ce que** les moyens de précontrainte (40, 62, 144) sont à ajustement automatique, et sont adaptés pour déplacer en continu au moins la plate-forme de réception de moyens d'entraînement (36, 56, 76, 138) sensiblement immédiatement lors de l'apparition d'un jeu de courroie tandis que la courroie fonctionne.

17. Système de montage selon la revendication 1, **caractérisé en ce que** la plate-forme de réception de moyens d'entraînement (36, 56, 76, 138) est ajustable manuellement par rapport à la base de support de moyens entraînés (10) tandis que la courroie fonctionne.

18. Système de montage selon la revendication 1, **caractérisé en ce qu'**il comporte en outre une base d'adaptation en Z (100) qui peut être positionnée de manière amovible entre la base de support de moyens d'entraînement (30, 50, 70, 84, 130) et la base de support de moyens entraînés (10), de telle sorte que la base de support de moyens d'entraînement (30, 50, 70, 84, 130) et la base de support de moyens entraînés (10) sont agencées l'une par rapport à l'autre selon une configuration sensiblement en Z.

19. Système de montage selon la revendication 18, **caractérisé en ce que** la base d'adaptation en Z (100) peut être positionnée entre les bases de support de moyens d'entraînement et de moyens entraînés dans une configuration en hauteur en Z, dans laquelle la poutre d'entraînement (74, 86, 132) est orientée verticalement droite dans un plan sensiblement perpendiculaire au plan de la plate-forme de base (16), ou dans une configuration à côté en Z, dans laquelle la poutre d'entraînement (34, 52, 132) est orientée sensiblement dans le même plan que la plate-forme de base (16).

20. Système de montage selon la revendication 19, **caractérisé en ce que** dans la configuration en hauteur en Z, la plaque de montage latérale (72, 134, 136) de la base de support de moyens d'entraînement (70, 84, 130) est connectée à la base d'adaptation en Z (100), qui est connectée à son tour à la base de support de moyens entraînés (10) d'une manière telle que les moyens d'entraînement (2) et les moyens entraînés (4) sont espacés sensiblement verticalement les uns des autres dans une configuration en Z, tandis que dans la configuration à côté en Z, la plaque de montage d'extrémité (32, 54, 134) de la base de support de moyens d'entraînement (30, 50, 130) est connectée à la base d'adaptation en Z (100), qui est connectée à son tour à la base de support de moyens entraînés (10), de telle sorte que les moyens d'entrainement et les moyens entraînés (2, 4) sont espacés sensiblement horizontalement les uns des autres selon une configuration en Z.

21. Système de montage selon la revendication 18, **caractérisé en ce que** la base d'adaptation en Z (100) comporte une plaque de base (103) orientée sensiblement dans le même plan que la plate-forme de base (16), deux plaques latérales opposées (102) et deux plaques d'extrémité opposées (104) connectées à la plaque de base (103), et des moyens de mise en prise adaptés pour venir en prise avec les bases de support des moyens d'entraînement et des moyens entraînés (2, 4).

22. Système de montage selon la revendication 21, **caractérisé en ce que** les bases de support de moyens d'entraînement et de moyens entraînés sont connectées de manière déconnectable à la base d'adaptation en Z (100), de telle sorte que la base de support de moyens d'entraînement (30, 50, 70, 84, 130) est connectée à l'une des plaques latérales ou d'extrémité de la base d'adaptation en Z (100), tandis que la base de support de moyens entraînés (10) est connectée à l'autre des plaques d'extrémité ou latérales de la base d'adaptation en Z (100), selon le cas.

23. Système de montage selon la revendication 1, **caractérisé en ce qu'**il comporte également au moins une protection de courroie (150) adaptée pour couvrir au moins partiellement une courroie s'étendant entre les moyens d'entrainement et les moyens entraînés (2, 4), et incluant au moins deux parois latérales parallèles opposées (152) espacées l'une de l'autre pour définir un trajet de courroie entre celles-ci adapté pour recevoir la courroie, et **caractérisé en outre en ce qu'**il prévoit un accès à la courroie en utilisation.

24. Base de support de moyens d'entraînement (30, 50, 70, 84, 130) adaptée pour coopérer avec une base de support de moyens entraînés (10) dans un système de montage modulaire, la base de support de moyens d'entraînement (30, 50, 70, 84, 130) comportant une poutre d'entraînement (34, 52, 74, 86, 132), des moyens de montage (32, 54, 72, 134, 136) connectés à la poutre d'entraînement (34, 52, 74, 86, 132) pour montage de la base de support de moyens d'entraînement (30, 50, 70, 84, 130) sur le sol ou une surface rigide analogue ou sur la base de support de moyens entraînés (10), et une plate-forme de réception de moyens d'entraînement (36, 56, 76, 138) liée mécaniquement à la poutre d'entraînement (34, 52, 74, 86, 132), et dimensionnée de manière adaptée pour recevoir les moyens d'entraînement (2) sur celle-ci.

25. Base de support de moyens d'entraînement (30, 50, 70, 84, 130) selon la revendication 24, **caractérisée en ce qu'**elle comporte des moyens de tension (38, 80) connectés à la plate-forme de réception de moyens d'entraînement (36, 56, 76, 138), et **en ce qu'**elle est mobile entre les positions tendue et sensiblement non-tendue de telle sorte que dans la position tendue, elle est rappelée vers la position non-tendue pour déplacer la plate-forme de réception de moyens d'entraînement (36, 56, 76, 138).

26. Base de support de moyens d'entraînement (30, 50, 70, 84, 130) selon les revendications 24 et 25, **caractérisée en ce qu'**elle comporte également des moyens de précontrainte (40, 62, 144), qui sont adaptés pour mettre en oeuvre un déplacement de la plate-forme de réception de moyens d'entraînement (36, 56, 76, 138) par rapport à la base de support de moyens entraînés (10) pour manipuler une distance entre les moyens d'entraînement et les moyens entraînés (2, 4) montés respectivement sur la plate-forme de réception de moyens d'entraînement (36, 56, 76, 138) et la base de support de moyens entraînés (10), en manipulant ainsi une tension de courroie d'une courroie s'étendant entre les moyens d'entraînement et les moyens entraînés (2, 4) en utilisation, les moyens de précontrainte (40, 62, 144) étant adaptés en outre pour déplacer la plate-forme de réception de moyens d'entraînement (36, 56, 76, 138) tout en déplaçant en même temps les moyens de tension (38, 80) vers leur position tendue.

27. Base d'adaptation en Z (100) adaptée pour une utilisation dans un système de montage modulaire incluant une base de support de moyens d'entrainement (30, 50, 70, 84, 130) pour supporter des moyens d'entraînement (2) sur celle-ci, et une base de support de moyens entraînés (10) pour supporter des moyens entraînés (4), la base d'adaptation en Z (100) pouvant être positionnée entre les bases de support de moyens d'entrainement et de moyens entraînés, de telle sorte que les bases de support de moyens d'entraînement et de moyens entraînés sont agencées l'une par rapport à l'autre selon une configuration sensiblement en Z.

28. Base d'adaptation en Z (100) selon la revendication 27, **caractérisée en ce que** la base d'adaptation en Z (100) comporte une plaque de base (103), deux plaques latérales opposées (102) et deux plaques d'extrémité opposées (104) connectées à la plaque de base (103), et des moyens de mise en prise adaptés pour une mise en prise des bases de support de moyens d'entraînement et de moyens entraînés.

29. Base d'adaptation en Z (100) selon les revendications 27 et 28, **caractérisée en ce que** les bases de support de moyens d'entraînement et de moyens entraînés sont connectées de manière déconnectable à la base d'adaptation en Z (100) de telle sorte que la base de support de moyens d'entraînement (30, 50, 70, 84, 130) est connectée à une première des plaques latérales ou d'extrémité de la base d'adaptation en Z (100), tandis que la base de support de moyens entraînés (10) est connectée à l'autre des plaques d'extrémité ou latérales de la base d'adaptation en Z (100), selon le cas.
